# EUROPÄISCHE PATENTSCHRIFT

(11) **EP 2 649 327 B1**
(45) Veröffentlichungstag und Bekanntmachung des Hinweises auf die Patenterteilung: **18.02.2015**
(21) Anmeldenummer: 11794055.1
(22) Anmeldetag: 08.12.2011
(51) Int. Cl.: G05D 16/20, F15B 20/00

(54) **STÖRUNGSSICHERES BETÄTIGUNGSSYSTEM**
FAIL-SAFE ACTUATION SYSTEM
SYSTÈME D'ACTIONNEMENT À SÉCURITÉ INTÉGRÉE

(30) Priorität: 08.12.2010 DE 102010053811
(43) Veröffentlichungstag der Anmeldung: 16.10.2013
(60) Teilanmeldung: 14187727.4
(73) Patentinhaber: MOOG GmbH, 71030 Böblingen (DE)
(72) Erfinder: HELBIG, Achim, 70184 Stuttgart (DE); BOES, Christoph, 72768 Reutlingen (DE); HÄNDLE, Werner, 71672 Marbach am Neckar (DE)
(74) Vertreter: Jostarndt, Hans-Dieter
(86) Internationale Anmeldenummer: PCT/EP2011/006187
(87) Internationale Veröffentlichungsnummer: WO 2012/076178

(56) Entgegenhaltungen:
- DE-A1-102004 045 011
- DE-B- 1 251 158
- US-A- 4 046 270
- US-A- 4 738 101
- US-A- 5 778 669
- US-A1- 2007 227 133

## Beschreibung

Die Erfindung betrifft ein störungssicheres Betätigungssystem mit einer Sicherheitsstellung, umfassend ein Stellorgan mit mindestens einer ersten und einer zweiten Kammer, einer Arbeitsschaltung mit einer Motor-/Pumpenvorrichtung, wobei mittels der Arbeitsschaltung das Stellorgan zumindest im Betriebszustand betätigbar ist, und einer Sicherheitsschaltung, mittels welcher das Stellorgan in einem Störungszustand in die Sicherheitsstellung überführbar ist, wobei die Sicherheitsschaltung einen Speicher zur Aufnahme unter Druck stehenden Fluids umfasst, der im Störungszustand selbsttätig mittels eines Schaltventils mit der ersten Kammer in Verbindung gebracht ist, und ein Ablassventil umfasst, das im Störungszustand zum Ablassen von Fluid aus der zweiten Kammer in Durchflussstellung gebracht ist, und die Sicherheitsschaltung derart ausgestaltet ist, dass im Betriebszustand ein von dem Speicher entkoppelter Zufluss mittels der Arbeitsschaltung mit der Motor-/Pumpenvorrichtung in das Stellorgan einstellbar ist und mittels der Sicherheitsschaltung im Störungszustand ein von der Arbeitsschaltung mit der Motor-/Pumpenvorrichtung vollständig entkoppelter Zufluss mittels des Speichers in die erste Kammer geschaffen ist.

Derartige Betätigungssysteme werden eingesetzt, um beispielsweise hydraulische oder pneumatische Kolben zu betätigen und in eine gewünschte Stellung zu bringen. Üblicherweise handelt es sich dabei um sicherheitsrelevante Anwendungen. Deshalb ist es notwendig, ein Betätigungssystem mit einer Sicherheitsstellung zu nutzen, wobei die Sicherheitsschaltung bei einem Störfall des Betätigungssystems das Stellorgan in eine sichere Position, d.h. die Sicherheitsstellung bringt.

Eine derartige Anwendung könnte z. B. die Blattverstellung einer Windturbine sein. Bei dieser Anwendung muss sichergestellt sein, dass bei Ausfall des regulären Verstellsystems eine Sicherheitsfunktion vorgehalten wird. Diese muss es ermöglichen, die Rotorblätter derart zu verstellen, dass keine unkontrollierbaren Betriebszustände eintreten. Ebenfalls denkbar wäre der Einsatz derartiger Betätigungssysteme für Gas-, Dampf- oder Wasserturbinen sowie für Anwendungen in der Öl- und Gasindustrie, in denen ebenfalls Stellorgane zum Einsatz gelangen, welche bei Eintritt eines Störfalls sicher und zuverlässig in eine vorgegebene Position zu bringen sind. Solche Stellorgane könnten z.B. Hydraulikkolben oder Sicherheitsventile sein.

DE 1251158 B offenbart eine hydraulische Anlage zur Betätigung von Arbeitszylindern, die einen unter sehr schwerer Last stehenden Hub- und Senkzylinder in seiner oberen, die Last haltenden Stellung festklemmen und lösen und in seiner unteren entlasteten Stellung verriegeln und lösen. Die Anlage umfasst einen Behälter, eine elektrisch betriebene Pumpe, eine Handpumpe, einen Druckspeicher" ein Speicherladeventil und eine Steuereinrichtung. Die drei Arbeitszylinder sind sternförmig radial um die Kolbenstange des Hub- und Senkzylinders angeordnet. Steht der Hub- und Senkzylinder in seiner ausgefahrenen Stellung, dann trägt die Kolbenstange eine sehr schwere Last. Die Kolbenstangen der Arbeitszylinder fahren aus und klemmen sie in ihrer Lage so fest, dass sie der Einwirkung der Last nicht nachzugeben imstande ist. Der Hub- und Senkzylinder kann drucklos gemacht werden. Nach dem Lösen geht der Hub- und Senkzylinder, da er drucklos ist, unter Einwirkung der Last sehr schnell in seine untere Stellung, wird dort abgefangen und von den drei Arbeitszylindern verriegelt.

US 2007/0227133 A1 offenbart eine Zylinderanordnung umfassend ein Zylindergehäuse mit einem inneren Zylindervolumen und einer Kolbenstange für eine axiale Bewegung innerhalb des Zylindervolumens. Die Kolbenstangenanordnung kann dabei eine axiale, in die Kolbenstangenanordnung hineinragende Passage umfassen. Die Zylinderanordnung kann des Weiteren ein röhrenförmiges Element umfassen, das von der axialen Passage aufgenommen wird, wobei zumindest ein Teil dieses röhrenförmigen Elements aus der röhrenförmigen Passage heraus- und in das innere Volumen des Zylindergehäuses zwischen der axialen Passage und der Wand des Zylindergehäuses hineinragt.

Aus der WO 2009/064264 A1 ist eine elektrohydraulische Schaltung bekannt, um den Anstellwinkel mindestens eines Rotorblatts einer Windturbine einzustellen. Die Schaltung umfasst einen Motor, welcher eine Pumpe antreibt. Die hydraulische Schaltung wird über einen Tank bzw. ein Reservoir mit Fluid versorgt, welches von der Pumpe in eine erste oder zweite Kammer eines Hydraulikkolbens gepumpt werden kann. Die Pumpe ist drehrichtungsvariabel, wobei bei einer ersten Drehrichtung Fluid in eine der Kammern gepumpt wird und das aus der anderen Kammer verdrängte Fluid zur Saugseite der Pumpe geleitet wird und ebenfalls in die zu befüllende Kammer gelenkt wird. Die hydraulische Schaltung umfasst des Weiteren einen mit Hydraulikfluid gefüllten Druckspeicher, der mittels eines federbelasteten Ventils mit der Hydraulikschaltung verbunden ist. Im regulären Betriebszustand ist der Speicher mittels des Ventils geschlossen und damit von der Hydraulikschaltung entkoppelt. In einem Störfall, z. B. bei Stromausfall, wird das federbelastete Ventil in Durchflussstellung gebracht, wodurch das im Speicher unter Druck gespeicherte Hydraulikfluid in die Schaltung gelangt. Die Ventile, welche in den Zuleitungen der beiden Kammern des Hydraulikkolbens positioniert sind, werden mittels Federkraft in Durchflussstellung gebracht. Das im Druckspeicher gespeicherte Hydraulikfluid fließt dann durch die Hydraulikschaltung in beide Kammern des Hydraulikkolbens. Dabei fließt das Fluid aus dem Speicher in die Arbeitsschaltung, d.h. die Schaltung die den Kolben während des regulären Betriebs mit Fluid versorgt. Das Fluid kann auf zwei Wegen durch die Arbeitsschaltung in Richtung der zu befüllenden Kammer des Kolbens fließen. Durch die Pumpe und/oder durch eine Leitung in welcher eine Drossel sowie ein im Störungszustand geöffnetes Schaltventil positioniert sind.

Der Hydraulikkolben ist als sogenannter Differentialkolben ausgebildet, weshalb trotz des in beiden Kammern herrschenden identischen Druckes auf die größere der beiden Kolbenflächen eine größere Kraft ausgewirkt wird und eine entsprechende Bewegung des Kolbens in die sichere Stellung erfolgt.

Nachteilig hieran ist, dass diese Schaltung bei blockierter Pumpe oder einer defekten Leitung bzw. defekter Schaltungselemente keine störungssichere Funktion gewährleistet werden kann.

Ein gattungsgemäßes störungssicheres Betätigungssystem ist z.B. aus der US 5301505 bekannt. Unter Verwendung eines Druckspeichers erfolgt eine Überführung des mittels zweier Kammern betätigbaren Zylinders in eine Sicherheitsstellung. Eine vergleichbare Konstruktion ist auch aus der EP 1498614 A1 bekannt.

Es ist deshalb Aufgabe der Erfindung, ein fluidtechnisches Betätigungssystem bereitzustellen, welches im Störungszustand eine vorgegebene Sicherheitsstellung zuverlässig einnehmen kann.

Hierzu ist erfindungsgemäß vorgesehen, ein gattungsgemäßes störungssicheres fluidtechnisches Betätigungssystem mit einer Sicherheitsstellung bereitzustellen, bei dem das Stellorgan drei Kammern aufweist, wobei die Sicherheitsschaltung derart ausgestaltet ist, dass im Betriebszustand ein von dem Speicher entkoppelter Zufluss mittels der Arbeitsschaltung mit der Motor-/Pumpenvorrichtung in die dritte Kammer einstellbar ist. Mittels dieser Gestaltung ist sowohl im Störungszustand als auch im Betriebszustand ein von der Arbeitsschaltung vollständig entkoppelter Zufluss aus dem Speicher in die erste Kammer geschaffen. Die dritte Kammer bewirkt also eine Entkopplung. Die erste Kammer ist lediglich mit dem Speicher verbunden. Die zweite Kammer ist lediglich mit der Arbeitsschaltung verbunden. Die dritte Kammer ist mit der Arbeitsschaltung sowie mit der Abflussleitung verbunden. Die Zuflüsse aus dem Speicher sowie der Arbeitsschaltung in das Stellorgan sind vollständig mittels getrennter Fluidleitungen in die jeweilige Kammer des Stellorgans entkoppelt.

Mittels eines solchen Betätigungssystems kann das Stellorgan im Störungszustand in die Sicherheitsstellung, d. h. in diejenige Position gebracht werden, in der eine Vorrichtung oder Anlage möglichst geringen Gefahren ausgesetzt ist bzw. von dieser Vorrichtung oder Anlage möglichst geringe Gefahren ausgehen. Ein üblicher Störungszustand könnte beispielsweise ein Stromausfall sein, der eine elektrisch betriebene Motor-/Pumpenvorrichtung außer Betrieb setzt und damit auch die Arbeitsschaltung funktionsunfähig macht. Die Arbeitsschaltung dient während des gewöhnlichen Betriebs, d. h. im Betriebszustand, zur Fluidversorgung des Stellorgans. Hierzu weist die Arbeitsschaltung eine Motor-/Pumpenvorrichtung auf, mittels welcher die jeweiligen Kammern des Stellorgans mit Fluid versorgt werden. Als Motor-/Pumpenvorrichtung ist jede Vorrichtung zu verstehen, mittels welcher ein Fluidstrom erzeugt werden kann. Üblicherweise ist dies ein Antriebsmotor der mit einer Fluidpumpe gekoppelt ist.

Daneben weist das Betätigungssystem eine Sicherheitsschaltung auf, welche zusätzlich zur Arbeitsschaltung vorgesehen ist. Die Sicherheitsschaltung ist dazu ausgelegt, das Stellorgan in einem Störungszustand in die Sicherheitsstellung zu überführen. Grundsätzlich kann die Sicherheitsstellung auch mittels der Arbeitsschaltung eingenommen werden. Beispielsweise wenn routinemäßige Wartungsarbeiten an der Anlage durchgeführt werden sollen. Mittels der Sicherheitsschaltung wird jedoch eine zusätzliche, d. h. redundante Möglichkeit der Einnahme der Sicherheitsstellung erreicht, für den Fall, dass die Arbeitsschaltung im Störungszustand nicht in der Lage ist, diese Funktion zu übernehmen. Für diesen Zweck ist die Sicherheitsschaltung derart ausgeführt, dass ein vom Speicher ausgelöster Zufluss von Fluid in die erste Kammer des Stellorgans sämtliche Funktionselemente der Arbeitsschaltung umgeht und nicht durch diese hindurchfließen muss. Als Funktionselemente bzw. -teile sind bewegte oder sich bewegende Elemente oder schaltbare Elemente zu verstehen.

Die Sicherheitsschaltung weist einen Speicher mit unter Druck stehendem Fluid auf, der dazu vorgesehen ist, im Störungszustand mit der ersten Kammer des Stellorgans in Verbindung gebracht zu werden und mit Fluid zu versorgen. Hierzu ist ein Schaltventil vorgesehen, welches sich während des Betriebszustands in Sperrstellung befindet und im Störungszustand selbsttätig in eine Durchflussstellung geht und die Fluidverbindung mit der ersten Kammer herstellt. Eine derartige selbsttätige Schaltfunktion eines Ventils kann beispielsweise durch ein mittels einer Feder vorgespanntes Ventil erreicht werden. Daneben umfasst die Sicherheitsschaltung ein Ablassventil, das im Störungsfall in der zweiten Kammer vorhandenes Fluid ablassen kann und damit eine Bewegung des Stellorgans, z. B. eines Hydraulikkolbens, ermöglicht. Die Durchflussstellung des Ablassventils ist derart zu verstehen, dass das Ablassventil sich in einer Sperrstellung befinden kann, um einen Fluss in der Leitung in der das Ablassventil positioniert ist zu sperren, d.h. zu unterbinden; und sich in der Durchflussstellung befinden kann, um einen Fluss in der Leitung freizugeben. Bevorzugt ist das Ablassventil ein schaltbares Ventil. Das Ablassventil kann als vorgesteuertes und/oder zwangsgesteuertes Ventil ausgebildet sein.

Die Sicherheitsschaltung ist derart ausgestaltet, dass der Speicher während des regulären Betriebszustandes nicht mit der ersten Kammer in Fluidverbindung steht. Der Speicher ist also im Betriebszustand in der Regel vom Stellorgan entkoppelt, so dass ein Zufluss in das Stellorgan während des Betriebszustands lediglich mit der Arbeitsschaltung mit der Motor-/Pumpenvorrichtung möglich ist. Des Weiteren wird mittels dieser Gestaltung des Betätigungssystems ein von der Arbeitsschaltung vollständig entkoppelter Zufluss, d. h. ein baulich getrennter Zufluss vom Speicher in die erste Kammer des Stellorgans im Störungszustand geschaffen. Das im Speicher gespeicherte Fluid kann damit direkt, d. h. ohne Umweg über die Arbeitsschaltung oder Funktionsteile hiervon, in die erste Kammer geleitet werden. Im Falle einer Leckage in der Arbeitsschaltung kann damit die Sicherheitsstellung des Stellorgans weiterhin zuverlässig erreicht werden, da das im Speicher befindliche Fluid über die Leitungen der Sicherheitsschaltung in die erste Kammer geleitet wird, und nicht über die Elemente der Arbeitsschaltung.

Die Aussage, dass mittels der Sicherheitsschaltung im Störungszustand ein von der Arbeitsschaltung mit der Motor-/Pumpenvorrichtung vollständig entkoppelter Zufluss mittels des Speichers in die erste Kammer geschaffen ist, ist insbesondere so zu verstehen, dass mittels der Sicherheitsschaltung im Störungszustand ein die Arbeitsschaltung mit der Motor-/Pumpenvorrichtung in Form eines Bypasses umgehender Zufluss mittels des Speichers in die erste Kammer geschaffen ist.

Soweit von einer Schaltung gesprochen wird, so sind darunter nicht nur lediglich aktive Schaltelemente, wie z. B. Ventile, zu verstehen, sondern auch die zugehörigen Leitungen und sonstigen Elemente wie sie üblicherweise in Hydraulikkreisläufen bzw. allgemeinen fluidtechnischen Systemen vorzufinden sind.

Der Begriff "vollständig entkoppelter Zufluss" ist derart zu verstehen, dass die Sicherheitsschaltung derart konfiguriert ist, dass bauliche Maßnahmen getroffen wurden, um einen Verlust von Fluid, das aus dem Speicher in das Stellorgan geleitet wird, aufgrund von z.B. Schäden in der Arbeitsschaltung auszuschließen. Hierzu ist die Arbeitsschaltung oder der Verbindungsbereich von Arbeitsschaltung und Sicherheitsschaltung derart ausgebildet, dass ein Fluss von Fluid im Störungszustand aus dem Speicher in die Arbeitsschaltung unterbunden ist.

Die Aussage, dass die Sicherheitsschaltung derart gestaltet sei, dass im Betriebszustand ein von dem Speicher entkoppelter Zufluss mittels der Arbeitsschaltung mit der Motor/Pumpenvorrichtung in das Stellorgan einstellbar sei, ist derart zu verstehen, dass bauliche Maßnahmen getroffen sind, die im Betriebszustand ein vom Speicher getrenntes Zufließen in das Stellorgan ermöglichen. Üblicherweise ist im Betriebszustand der Zufluss vom Speicher in das Stellorgan unterbunden, d.h. entkoppelt. Bevorzugt ist der entkoppelte Zufluss in das Stellorgan einstellbar, d.h. wählbar ausgeführt, um im Störungszustand einen Zufluss vom Speicher mittels der Arbeitsschaltung in das Stellorgan einstellen zu können und im Betriebszustand den Zufluss vom Speicher von der Arbeitsschaltung in das Stellorgan beenden zu können.

Entsprechend ergibt sich, dass grundsätzlich die Möglichkeit besteht, bei betriebsfähiger Arbeitsschaltung Fluid zu fördern und ebenfalls Fluid aus dem Speicher, d.h. aus der Sicherheitsschaltung zuzuführen, um das Stellorgan mit diesen kombinierten Fluidströmen in eine Sicherheitsstellung zu überführen. Ist die Arbeitsschaltung jedoch nicht betriebsfähig, so ist aufgrund des vollständig entkoppelten Zuflusses in die erste Kammer der Speicher in der Lage, Fluid zuzuführen und das Stellorgan in die Sicherheitsstellung zu überführen.

Gemäß einer Variante kann auch mindestens ein Ventilelement vorgesehen sein, das zum vollständigen Entkoppeln der Sicherheitsschaltung von der Arbeitsschaltung im Störungszustand eine Fluidverbindung zwischen dem aus dem Speicher freigegebenen Fluid mit dem in der Arbeitsschaltung befindlichen Fluid verhindert. Um also einen Verlust von Fluid aus dem Speicher zu verhindern und sicherzustellen, dass die möglichst volle Menge an Fluid aus dem Speicher zum Überführen des Stellorgans in die sichere Stellung zur Verfügung steht, wird ein Ventilelement genutzt, das eine Fluidverbindung zwischen Sicherheitsschaltung und Arbeitsschaltung verhindert. Die Mindestanforderungen an das Ventilelement sind deshalb, dass dieses im Störungszustand zumindest eine Fluss- bzw. eine Fluidverbindung in die Arbeitsschaltung unterbindet. Dies könnte mit Hilfe eines Rückschlagventils oder entsperrbaren Rückschlagventils geschehen. Das Ventilelement ist bevorzugt so angeordnet, dass alle Funktionselemente der Arbeitsschaltung von der Sicherheitsschaltung entkoppelt sind und dennoch alle sich anschließenden Leitungsstränge gemeinsam sowohl vom aus dem Speicher als auch von der Arbeitsschaltung geförderten Fluid verwendet werden können.

Es kann auch vorgesehen sein, dass das Ablassventil derart ausgestaltet und angesteuert ist, dass ein Fluiddruck aus dem Speicher im Störungszustand als Steuerdruck am Ablassventil ansteht. Auf diese Weise ist sichergestellt, dass im Störungszustand bei geöffnetem Schaltventil und anliegendem Speicherdruck auch das Ablassventil in der Regel geöffnet ist. Auf diese Weise kann in eine Kammer des Stellorgans Fluid aus dem Speicher eingeleitet werden und zugleich Fluid aus einer anderen Kammer abgelassen werden. Entsprechend vergrößert sich das Volumen der einen Kammer und verringert sich das Volumen der anderen Kammer. Die Schaltung ist derart ausgestaltet, dass der Steuerdruck lediglich im Störungszustand am Ablassventil ansteht. Bevorzugt ist vorgesehen, dass der Steuerdruck lediglich bei geöffnetem Schaltventil ansteht. Eine solche Schaltung kann baulich realisiert werden, indem eine fluidgefüllte Leitung mit dem Ablassventil verbunden ist und diese Leitung im Störungszustand mit dem Druck aus dem Speicher beaufschlagt ist. Das in der Steuerleitung befindliche Fluid wird dann mittels des aus dem Speicher aufgebrachten Druck gegen das Ablassventil gepresst, welches sich hierauf öffnet.

Alternativ besteht aber auch die Möglichkeit, dass das Ablassventil derart ausgestaltet und angesteuert ist, dass im Störungszustand eine, bevorzugt mechanische oder elektrische, Zwangsöffnung mittels des Schaltventils erfolgt. In diesem Zusammenhang besteht auch die Möglichkeit, diese Funktion in das Schaltventil selbst zu integrieren, so dass bei einem entsprechenden Schaltvorgang des Schaltventils automatisch das Ablassventil mit zwangsgeöffnet wird.

Weiter kann vorgesehen sein, dass die Sicherheitsschaltung eine Abflussleitung umfasst, welche mit der zweiten Kammer des Stellorgans verbunden ist und in der das Ablassventil positioniert ist, wobei die Abflussleitung vom Speicher vollständig entkoppelt ist. Sofern das Stellorgan als Differentialkolben ausgeführt ist, ist mittels der baulichen Trennung von Zufluss und Abfluss im Störungsfall die Differenzwirkung, d.h. die Üblicherweise auftretende selbsttätige Geschwindigkeitsregulierung bei Differentialkolben, außer Kraft gesetzt. Es besteht hierdurch die Möglichkeit der Einflussnahme auf die Bewegungsgeschwindigkeit des Stellorgans im Störungszustand beim Überführen in die Sicherheitsstellung. Dies kann beispielsweise mittels des gewählten Durchflussquerschnitts von Speicher- oder Abflussleitung oder einer Drossel in diesen Leitungen erfolgen.

Die Abflussleitung dient dem Abfluss bzw. Ableiten von Fluid aus der zweiten Kammer im Störungszustand. In der Abflussleitung, bevorzugt nahe des Stellorgans ist das Ablassventil positioniert. Die Abflussleitung ist vollständig vom Speicher entkoppelt, d.h. baulich derart gestaltet und positioniert, dass eine Vermengung von Fluid aus dem Speicher mit Fluid in der Abflussleitung nicht möglich ist, bzw. ein Einleiten von Fluid aus dem Speicher in die Abflussleitung nicht möglich ist.

Zudem kann vorgesehen sein, dass die Abflussleitung die Arbeitsschaltung umgeht. Dies ermöglicht einen Abfluss aus der Kammer bzw. das gesteuerte Ablassen von Fluid aus dem Stellorgan selbst wenn die Arbeitsschaltung beschädigt sein sollte und eine Betätigung eines Ablassorgans in der Arbeitsschaltung nicht möglich ist. Die Abflussleitung und damit auch das Ablassventil sind also hinsichtlich der Funktion des Ablassens redundant zur Arbeitsschaltung. Bevorzugt ist die Abflussleitung derart gestaltet und konfiguriert, dass Fluid, welches aus dem Stellorgan abgelassen wird, im Störungszustand lediglich in die Abflussleitung fließt und eine Vermengung von Fluid aus dem Stellorgan und Fluid in der Arbeitsschaltung ausgeschlossen ist. Die Abflussleitung bildet einen Abflussweg, der die Arbeitsschaltung umgeht.

Als weitere Alternative kann vorgesehen sein, dass ein Tank, d.h. Reservoir, zur Aufnahme von Fluid vorgesehen ist und die Abflussleitung stromabwärts des Ablassventils in das Reservoir mündet. Das Reservoir dient dazu, Fluid vorzuhalten und in das Betätigungssystem abzugeben sowie aus diesem Aufzunehmen. Zumindest die Abflussleitung mündet in das Reservoir und ist mit diesem verbunden.

Als weitere Ausgestaltung ist denkbar, dass die Arbeitsschaltung eine Fluidverbindung zum Reservoir aufweist, mittels welcher Fluid aus dem Reservoir in die Arbeitsschaltung aufnehmbar ist. Hierzu weist das Betätigungssystem eine Reservoirleitung auf, die die Arbeitsschaltung mit dem Reservoir verbindet. Die Arbeitsschaltung kann hierüber Fluid aus dem Reservoir ansaugen.

Weiter kann eine Füllleitung vorgesehen sein, mittels der Fluid aus der Arbeitsschaltung dem Speicher zuführbar ist, wobei der Speicher mittels mindestens einem Ventilelement von der Ventilschaltung entkoppelt ist, welches ein Rückfließen von Fluid in die Arbeitsschaltung verhindert. Mittels der Füllleitung ist es ermöglicht, Fluid von der Arbeitsschaltung in den Speicher zu pumpen. Hierzu setzt die Motor-/Pumpenvorrichtung das Fluid unter Druck und leitet dies über die Füllleitung in den Speicher. Um einen Druckverlust im Speicher auszuschließen, und einen Rückfluss des Fluids in die Arbeitsschaltung zu verhindern, ist zur Entkopplung des Speichers von der Arbeitsschaltung ein Ventilelement vorgesehen, welches einen Rückfluss von Fluid in die Arbeitsschaltung verhindert. Ein solches Ventilelement kann beispielsweise als Rückschlagventil oder ein zumindest im Störungszustand selbsttätig schließendes Ventil sein. Eine derartige Konfiguration hat zudem den Vorteil, dass nach Füllen des Speichers dieser im Betriebszustand von der Arbeitsschaltung entkoppelt ist, und der gespeicherte Druck nicht entweichen kann. Dies bedeutet, dass auch bei einem Druckverlust in der Arbeitsschaltung der Druck im Speicher erhalten bleibt und nach erneutem Druckaufbau in der Arbeitsschaltung kein erneutes Füllen des Speichers notwendig ist. Der im Speicher gespeicherte Druck steht damit ständig bereit, um bei einem eintretenden Störungszustand das Stellorgan in die Sicherheitsstellung zu überführen. Zudem ermöglicht das Ventilelement im Betriebszustand mit Fluiddrücken zu arbeiten, die unterhalb des Drucks im Speicher liegen.

Denkbar ist, dass im Betriebszustand bei stillstehender Motor-/Pumpenvorrichtung ein Fluss von Fluid aus Kammern, die mit der Arbeitsschaltung in Verbindung stehen mittels mindestens eines Ventilelements verhindert ist. Dies ermöglicht es, das Stellorgan in eine gewünschte Position zu bringen und diese Position auch bei ausgeschalteter Arbeitsschaltung, d.h. ausgeschalteter Motor-/Pumpenvorrichtung zu halten. Um einen solchen Sperrzustand zu ermöglichen, ist der Fluss aus dem Stellorgan gesperrt. Erreicht wird dies, indem mindestens ein Ventil vorgesehen ist, das einen Fluss in die Arbeitsschaltung verhindert. Zudem kann ein Ablassventil vorgesehen sein, das im Sperrzustand einen Fluss aus dem Stellorgan in die Abflussleitung verhindert. Ebenso kann ein Sperrorgan vorgesehen sein, das zumindest im Sperrzustand einen Fluss aus dem Stellorgan in Richtung des Speichers verhindert.

Das mindestens eine Ventilelement ist zudem derart ausgestaltet, um zumindest im Störungszustand einen Durchfluss in einer Fließrichtung zu sperren. Sofern also ein Element des Betätigungssystems als Ventilelement bezeichnet wird, ist dies als ein Element zu verstehen, das derart gestaltet ist, um zumindest im Störungszustand einen Durchfluss in einer Fließrichtung zu sperren. Dabei kann das Ventilelement gestaltet sein, um lediglich im Störungszustand einen Durchfluss in einer Fließrichtung zu sperren oder dies sowohl im Störungszustand als auch im Betriebszustand zu tun. Weiterhin kann vorgesehen sein, dass das Ventilelement schaltbar ausgestaltet ist, um abhängig von den Betriebsbedingungen während eines ersten Betriebszustands einen Durchfluss in einer Fließrichtung zu sperren, in einem zweiten Betriebszustand keinen Durchfluss in beiden Fließrichtung zuzulassen, und im Störungszustand den Durchfluss in einer Fließrichtung zu sperren. Bevorzugt ist das Ventilelement konfiguriert, um im Störungszustand selbsttätig den Durchfluss in einer Fließrichtung zu sperren. Als Ventilelemente könnten beispielsweise Rückschlagventile, entsperrbare Rückschlagventile, oder federbelastete Schaltventile zum Einsatz gelangen. Bevorzugt ist die Fließrichtung, in der ein Durchfluss gesperrt wird, die Fließrichtung aus dem Speicher zur Arbeitsschaltung. Des Weiteren soll auch vorgesehen sein, einen Fluss in Fließrichtung von dem Stellorgan in Richtung der Arbeitsschaltung zu sperren, so dass lediglich ein Fluss in die Abflussleitung ermöglicht ist.

In einer Ausführungsform kann vorgesehen sein, dass die Motor-/Pumpenvorrichtung eine erste und eine zweite Anschlussleitung aufweist, wobei im Betriebszustand eine der Anschlussleitungen Fluid in Richtung einer Kammer des Stellorgans leitet und die andere der Anschlussleitungen Fluid aus Richtung der mindestens einen anderen Kammer des Stellorgans zur Motor-/Pumpenvorrichtung leitet. Die Motor-/Pumpenvorrichtung weist demnach zwei Anschlussleitungen auf, wobei eine Anschlussleitung als Zuleitung und die zweite Anschlussleitung als Ableitung dient. Dabei leitet eine der Anschlussleitungen Fluid in Richtung einer Kammer des Stellorgans, wohingegen die andere Anschlussleitung Fluid aus Richtung einer anderen Kammer des Stellorgans zur Motor-/Pumpenvorrichtung leitet. Hierdurch ergibt sich, dass Fluid, welches aus einer Kammer verdrängt wird, zumindest teilweise direkt zur Motor-/Pumpenvorrichtung geleitet wird und direkt in die andere Kammer gepumpt wird. Bevorzugt wird also Fluid, welches aus einer Kammer verdrängt wird, nicht in das Reservoir geleitet, woraus es dann erneut von der Pumpe angesaugt werden muss. Dies ermöglicht ein geringeres im Betätigungssystem notwendiges Fluidvolumen, eine kleinere Ausgestaltung des Reservoirs sowie entsprechend geringeren notwendigen Bauraum für das Betätigungssystem.

Weiter kann vorgesehen sein, dass die Arbeitsschaltung eine in ihrer Förderrichtung umkehrbare Motor-/Pumpenvorrichtung aufweist, wobei bei einer ersten Förderrichtung der Motor-/Pumpenvorrichtung die erste Anschlussleitung Fluid in Richtung einer Kammer des Stellorgans leitet und die zweite Anschlussleitung Fluid aus Richtung der mindestens einen anderen Kammer des Stellorgans zur Motor-/Pumpenvorrichtung leitet, und in der zweiten Förderrichtung die Flussrichtungen in der ersten und zweiten Anschlussleitung entgegengesetzt zu den Flussrichtungen während der ersten Drehrichtung sind. Die Anschlussleitungen sind demnach dazu ausgelegt, sowohl Fluid in einer Flussrichtung als auch in einer anderen Flussrichtung zu leiten. Hierdurch besteht die Möglichkeit, Fluid von einer Kammer mittels der Pumpe direkt in eine andere Kammer zu pumpen, wobei bei umgekehrter Drehrichtung bzw. umgekehrter Förderrichtung auch ein Pumpvorgang in die entgegengesetzte Flussrichtung möglich ist. Es wird hierdurch ermöglicht, eine Bewegung des Stellorgans in eine Richtung zu erreichen, indem die Motor-/Pumpenvorrichtung in eine Förderrichtung fördert, und eine weitere Bewegungsrichtung des Stellorgans zu erreichen, indem die Motor-/Pumpenvorrichtung in die andere Förderrichtung fördert. Die Umkehrung der Förderrichtung kann mittels einer drehrichtungsvariablen Motor-/Pumpenvorrichtung oder anderen baulichen Mitteln erfolgen, die eine Umkehrung der Förderrichtung bewirken. So sind beispielsweise verstellbare Axial- und Radialkolbenpumpen bekannt, die auch bei gleichbleibender Drehrichtung eine Umkehrung der Förderrichtung erlauben.

Eine weitere Variante ergibt sich dadurch, dass die Arbeitsschaltung eine drehzahlveränderbare Konstant- oder Verstellpumpe umfasst. Mittels der variabel wählbaren Drehzahl der Pumpe kann die gewünschte Verdrängungsleistung bzw. der gewünschte Druck eingestellt werden. Es besteht die Möglichkeit eine drehzahlveränderbare Konstantpumpe sowie eine drehzahlveränderbare Verstellpumpe einzusetzen. Alternativ ist aber auch der Einsatz einer mit konstanter Drehzahl laufenden Verstellpumpe grundsätzlich möglich.

Des Weiteren ist noch eine alternative Erfindung offenbart, die auch im Rahmen einer Teilungsanmeldung heraustrennbar ist. Diese bezieht sich auf ein störungssicheres fluidtechnisches Betätigungssystem (1) mit einer Sicherheitsstellung, umfassend
ein Stellorgan (2) mit mindestens einer ersten und einer zweiten Kammer (3,4), eine Arbeitsschaltung (5) mit einer Motor-/Pumpenvorrichtung (6), wobei mittels der Arbeitsschaltung (5) das Stellorgan (2) zumindest im Betriebszustand betätigbar ist, und
eine Sicherheitsschaltung, mittels welcher das Stellorgan (2) in einem Störungszustand in die Sicherheitsstellung überführbar ist, wobei die Sicherheitsschaltung einen Speicher (7) zur Aufnahme unter Druck stehenden Fluids umfasst, der im Störungszustand selbsttätig mittels eines Schaltventils (8) mit der ersten Kammer (3) in Verbindung gebracht ist, und ein Ablassventil (9) umfasst, das im Störungszustand zum Ablassen von Fluid aus der zweiten Kammer (4) in Durchflussstellung gebracht ist, und die Sicherheitsschaltung derart ausgestaltet ist, dass im Betriebszustand ein von dem Speicher (7) entkoppelter Zufluss mittels der Arbeitsschaltung (5) mit der Motor-/Pumpenvorrichtung (6) in das Stellorgan (2) einstellbar ist, und mittels der Sicherheitsschaltung im Störungszustand ein von der Arbeitsschaltung (5) mit der Motor-/Pumpenvorrichtung (6) vollständig entkoppelter Zufluss mittels des Speichers (7) in die erste Kammer (3) geschaffen ist, dadurch gekennzeichnet, dass eine Kurzschlussfluidverbindung zwischen der ersten und der zweiten Kammer (3,4) vorgesehen ist, die im Störungszustand zum Erzeugen einer Kurzschlussströmung zwischen der zweiten und der ersten Kammer (3,4) durchgeschaltet ist.

Mittels dieser schaltbaren Kurzschlussfluidverbindung lässt sich auf einfache Weise das Problem unterschiedlich großer Zu- und Abflussströmung, insbesondere bei einem Differentialkolben ausgleichen. Die zweite Kammer weist üblicherweise ein geringeres Volumen auf, als die erste Kammer. Beim Durchschalten der Kurzschlussfluidverbindung fließt der Fluidstrom aus der zweiten Kammer über die Kurzschlussfluidverbindung mit in die erste Kammer hinein und unterstützt das Fahren des Stellorgans in die Sicherheitsstellung. Dieser Vorgang erfolgt bevorzugt vollständig entkoppelt von der Arbeitsschaltung. Des Weiteren können Maßnahmen vorgesehen sein, die ein Einströmen von Fluid aus dem Speicher in die zweite Kammer verhindern, z.B. in Form eines Rückschlagventils.

Günstigerweise kann hierzu in der Kurzschlussfluidverbindung ein Kurzschlussventil vorgesehen sein, das derart ausgestaltet und angesteuert ist, dass im Störungszustand eine, bevorzugt mechanische oder elektrische, Zwangsöffnung mittels des Schaltventils (8) erfolgt. Das Verbinden des Speichers mit der ersten Kammer erfolgt demnach automatisch zusammen mit der Durchschaltung der Kurzschlussfluidverbindung mittels des Kurzschlussventils aufgrund der Zwangssteuerung.

Günstigerweise können hierzu das Schaltventil und das Kurzschlussventil auch zu einer Baueinheit zusammengefasst werden, so dass das Kurzschlussventil integraler Bestandteil des Schaltventils wird. Es besteht auch die Möglichkeit einer Verschaltungsvariante, bei der das Schaltventil diese Aufgabe automatisch mit übernimmt, ohne dass es einer konstruktiven Änderung des Schaltventils bedarf.

Diese alternative Erfindung lässt sich sinnvollerweise auch mit den jeweils gegenüber Anspruch 1 neuen Merkmalen der Unteransprüche 2, 5 bis 13 (einschließlich deren Kombinationen) verknüpfen. Auch bezieht sich die alternative Erfindung auf ein Verfahren zur Betätigung eines Stellorgans mittels eines störungssicheren Betätigungssystems (1), wobei im Betriebszustand das Stellorgan (2) mittels der, in die erste oder die zweite Kammer (3,4) fördernden Arbeitsschaltung (5) betätigt wird, und im Störungszustand das Stellorgan (2) in die Sicherheitsstellung gebracht wird, umfassend die Schritte:

Verbinden des Speichers (7) mit der ersten Kammer (3) des Stellorgans (2), wobei ein von der Arbeitsschaltung (5) vollständig entkoppelter Zufluss in die erste Kammer (3) geschaffen ist, Kurzschließen des Fluidstroms aus der zweiten Kammer (4) des Stellorgans (2) mittels eines Kurzschlussventils mit der ersten Kammer (3).

Darüber hinaus kann sich die alternative Erfindung auch auf die Verwendung dieses alternativen störungssicheren Betätigungssystems in einer Windkraftanlage zum Einstellen des Anströmwinkels mindestens eines Rotorblatts beziehen.

Weiter wird die gestellte Aufgabe durch ein Verfahren zur Betätigung eines Stellorgans mit drei Kammern mittels eines zuvor beschriebenen störungssicheren Betätigungssystems gelöst, wobei im Betriebszustand das Stellorgan mittels der, in die zweite oder die dritte Kammer (4,15) fördernden Arbeitsschaltung betätigt wird, und im Störungszustand das Stellorgan in die Sicherheitsstellung gebracht wird, umfassend die Schritte: Verbinden des Speichers mit der ersten Kammer des Stellorgans, wobei ein von der Arbeitsschaltung vollständig entkoppelter Zufluss in die erste Kammer geschaffen ist; und Ablassen von Fluid aus der zweiten Kammer des Stellorgans mittels des Ablassventils, das hierzu in Durchflussstellung gebracht wird. Dieses Verfahren ermöglicht es, das Betätigungssystem mit den genannten Schritten in die Sicherheitsstellung zu bringen.

Weiter ist erfindungsgemäß vorgesehen, ein störungssicheres Betätigungssystem wie zuvor beschrieben in einer Windkraftanlage zum Einstellen des Anströmwinkels mindestens eines Rotorblatts zu verwenden.

Im Folgenden werden die Ausführungsformen anhand der Zeichnungen näher beschrieben.

Es zeigen:
- Fig. 1: eine schematische Darstellung der Schaltungsanordnung eines Betätigungssystems,
- Fig. 2: ein weiteres Betätigungssystem im Betriebszustand,
- Fig. 3: eine Darstellung des Betätigungssystems aus Fig. 2 im Störungszustand,
- Fig. 4: eine Darstellung des Betätigungssystems aus Fig. 2 beim Befüllen des Speichers,
- Fig. 5: eine erfindungsgemäße Ausführungsform eines Betätigungssystems,
- Fig. 6: ein beispielhaftes Stellorgan zum Einsatz im Betätigungssystem nach Fig. 5,
- Fig. 7: ein weiteres Betätigungssystem im Betriebszustand,
- Fig. 8: eine Darstellung des Betätigungssystems aus Fig. 7 im Störungszustand, und
- Fig. 9: eine Darstellung des Betätigungssystems aus Fig. 7 beim Befüllen des Speichers.

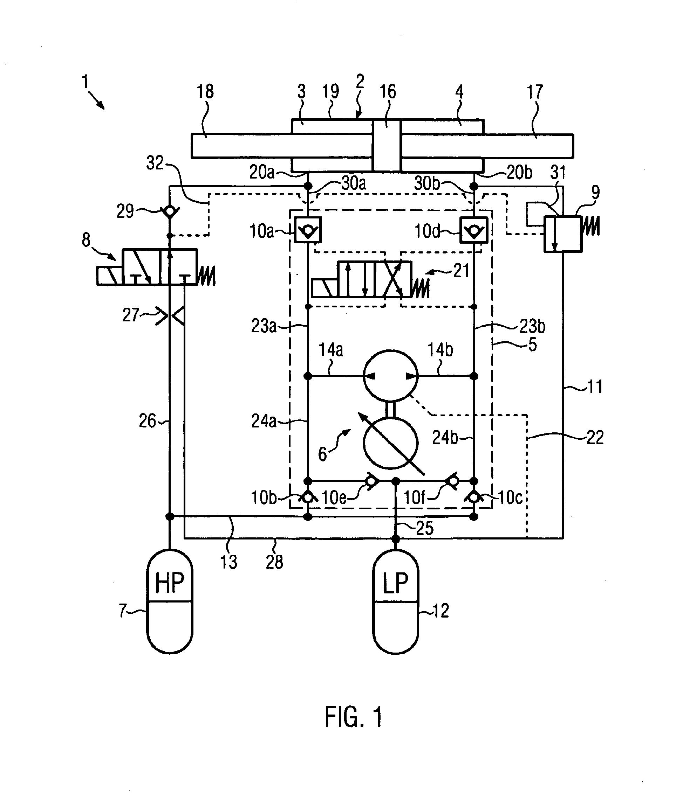

In Fig. 1 ist ein Schaltdiagramm für das Betätigungssystem 1 dargestellt. Das Betätigungssystem 1 umfasst eine Arbeitsschaltung 5 sowie eine Sicherheitsschaltung und ein Stellorgan 2. Das Stellorgan 2 umfasst eine erste Kammer 3 und eine zweite Kammer 4. Erste und zweite Kammern 3, 4 werden mittels eines Stempels 16 unterteilt. Verbunden mit dem Stempel 16 ist ein Kolben 17, welcher sich durch die zweite Kammer 4 erstreckt und aus dieser, durch das Gehäuse 19 hindurch, heraus ragt. Im gezeigten Ausführungsbeispiel ist ein weiterer Kolbenabschnitt 18 auf einer weiteren Seite des Stempels 16 befestigt, welcher sich durch die erste Kammer 3 erstreckt und aus dieser, durch das Gehäuse 19 hindurch, heraus ragt. In die Kammern 3, 4 kann Fluid, z.B. Hydraulikfluid, eingeleitet werden, was eine Volumenvergrößerung der einen Kammer und eine entsprechende Volumenverringerung der zweiten Kammer bewirkt. Die Kammern 3, 4 sind im Wesentlichen dicht, was bedeutet, dass der Stempel 16, der Kolben 17 und Kolbenabschnitt 18 mit dem Gehäuse 19 ein im wesentlichen fluiddichtes System bilden. Entsprechend dichtet der Stempel 16 die erste Kammer 3 zur zweiten Kammer 4 ab. Der Kolben 17, welcher sich durch einen Wandbereich des Gehäuses 19 erstreckt, dichtet die zweite Kammer 4 zur Umgebung ab. Der Kolbenabschnitt 18, welcher sich durch einen Wandbereich des Gehäuses 19 erstreckt, dichtet die erste Kammer 3 zur Umgebung ab.

Der Stempel 16 mit Kolben 17 und Kolbenabschnitt 18 kann zwischen zwei Endpositionen bewegt werden. In der ersten Endposition ist die erste Kammer 3 mit dem maximalen Fluidvolumen gefüllt, wohingegen die zweite Kammer 4 vollständig entleert ist. Der Kolben 17 ist in dieser Endposition vollständig ausgefahren. Diese Endposition wird im Folgenden auch die Sicherheitsstellung genannt. Die zweite Endposition wird erreicht, indem die zweite Kammer 4 mit ihrem maximalen Fluidvolumen gefüllt wird, wohingegen die erste Kammer 4 im Wesentlichen vollständig entleert ist. In diesem Fall ist der Kolben 17 eingefahren, d.h. erstreckt sich mit einem kürzeren Bereich aus dem Gehäuse 19 heraus.

Das Stellorgan 2 weist zwei Anschlussverbindungen 20a, 20b auf, mittels welchen Fluid jeweils in die Kammer 3 bzw. in die Kammer 4 ein- und ausleitbar ist. Die Arbeitsschaltung 5 des gezeigten Ausführungsbeispiels steht also mit der ersten Kammer 3 und der zweiten Kammer 4 in Verbindung.

Die Arbeitsschaltung 5 der gezeigten Ausführungsform umfasst eine Motor-/Pumpenvorrichtung 6, ein Steuerventil 21, eine erste und zweite Anschlussleitung 14a, 14b und Ventilelemente 10a, 10b, 10c, 10d, 10e, 10f. Des Weiteren umfasst die Arbeitsschaltung 5 weitere Fluidleitungen, wie erste Stellorganleitungen 23a, 23b und erste und zweite Fluidleitungen 24a, 24b, die die jeweiligen Elemente miteinander verbinden. Anders ausgedrückt, umfasst die Arbeitsschaltung alle Elemente, die zum Bewegen des Stellorgans im Normalbetrieb eingesetzt sind.

Im Ausführungsbeispiel der Fig. 1 ist die Arbeitsschaltung mittels der Ventilelemente 10a, 10b, 10c, 10d, 10e, 10f zur Sicherheitsschaltung und den verbleibenden Elementen des Betätigungssystems abgegrenzt.

Die Motor-/Pumpenvorrichtung 6 weist einen Motor, bevorzugt einen Elektromotor, und eine Pumpe auf. Der Motor treibt die Pumpe an und sorgt damit für die Fluidversorgung des Betätigungssystems. Der Motor ist bevorzugt drehzahlvariabel und kann bevorzugt in zwei Drehrichtungen betrieben werden.

Die Pumpe weist eine erste und eine zweite Anschlussleitung 14a, 14b auf. In einer ersten Drehrichtung des Motors dient die Anschlussleitung 14a als Saugleitung bzw. Zuleitung und die zweite Anschlussleitung 14b als Ableitung. In der anderen Drehrichtung dient die zweite Anschlussleitung 14b als Zuleitung und die erste Anschlussleitung 14a als Ableitung. An der Pumpe ist eine Leckleitung 22 angeschlossen, durch welche Leckflüssigkeit abgeleitet werden kann. Im gezeigten Ausführungsbeispiel verzweigt sich die erste Anschlussleitung 14 in eine erste Stellorganleitung 23a und eine erste Fluidleitung 24a. Mittels der ersten Stellorganleitung 23a kann Fluid in Richtung der ersten Kammer 3 des Stellorgans 2 geleitet werden bzw. von der ersten Kammer 3 zurück zur Pumpe geleitet werden. Entsprechend verzweigt sich die zweite Anschlussleitung 14b ebenfalls in eine zweite Stellorganleitung 23b und eine zweite Fluidleitung 24b. Mittels der zweiten Stellorganleitung 23b kann Fluid in Richtung der zweiten Kammer 4 des Stellorgans 2 geleitet werden oder aus der zweiten Kammer 4 zurück zur Pumpe geleitet werden. Im Anschluss an die ersten und zweiten Stellorganleitungen 23a, 23b sind jeweils ein Ventilelement 10a, 10d positioniert. Die Ventilelemente 10a, 10d sind derart ausgeführt, dass ein Fluss von der Pumpe durch die Stellorganleitungen 23a, 23b und durch die Ventilelemente 10a, 10d ermöglicht ist, jedoch ein Rückfluss aus den Kammern 3, 4 des Stellorgans 2 durch die Ventilelemente 10a, 10d nur in einer geschalteten Durchflussstellung ermöglicht ist. Ein Fluss durch die Ventilelemente 10a, 10d in Richtung des Stellorgans ist demnach möglich, wohingegen ein Rückfluss durch die Ventilelemente 10a, 10d in die Stellorganleitungen 23a, 23b nur unter vorgegebenen Betriebszuständen möglich ist. Bevorzugt sind die Ventilelemente 10a, 10d deshalb als schaltbare Rückschlagventile ausgebildet. Die Ventilelemente 10a, 10d bilden den Abschluss der Arbeitsschaltung 5 hinsichtlich der Leitungen, welche zur Versorgung des Stellorgans 2 dienen.

Um einen Rückfluss aus den Kammern 3, 4 des Stellorgans 2 in die Stellorganleitungen 23a, 23b zu ermöglichen, ist ein Steuerventil 21 vorgesehen. Mittels des Steuerventils 21 ist es ermöglicht, jeweils eines der Ventilelemente 10a, 10d derart zu öffnen, dass ein Rückfluss in die jeweilige Stellorganleitung ermöglicht ist. Entsprechend ist beispielsweise bei einem für den Rückfluss geöffneten Ventilelement 10a, der Rückfluss in Ventilelement 10d gesperrt, und umgekehrt. Dies kann beispielsweise dadurch erreicht werden, dass das Steuerventil 21 als Vier/Zwei-Wegeventil ausgebildet ist. In den ersten und zweiten Stellorganleitungen 23a, 23b ist hierzu jeweils eine Signalverbindung zum Steuerventil 21 geschaffen. Dies heißt, dass bei einem Druck in der ersten Stellorganleitung 23a ein Drucksignal an das Steuerventil 21 abgegeben wird. Entsprechend wird bei Druck in der zweiten Stellorganleitung 23b ein Drucksignal an das Steuerventil 21 abgegeben. Das Steuerventil 21 weist in einer ersten Schaltstellung eine Überkreuzschaltung auf und in einer zweiten Schaltstellung eine parallele Schaltung auf. Sofern am Steuerventil 21 kein Strom anliegt, so ist die Überkreuzschaltung mittels einer Feder eingestellt. Wird Strom an das Steuerventil 21 angelegt, so liegt die Parallelschaltung an. Die jeweiligen Schaltzustände können auch auf andere geeignete Art und Weise eingestellt werden, wobei jedoch die Überkreuzschaltung im stromlosen bzw. im Störungszustand vorliegen soll. Vom Steuerventil 21 führt jeweils eine Signalleitung zum Ventilelement 10a und Ventilelement 10d.

Entsprechend ergibt sich eine derartige Verschaltung, dass bei Druck in der ersten Steilorganleitung 23a mittels der Überkreuzschaltung im Steuerventil 21 ein Entsperren des Ventilelements 10d in der zweiten Stellorganleitung 23b erfolgt. Bei anliegendem Druck in der zweiten Stellorganleitung 23b wird mittels der Überkreuzschaltung im Steuerventil 21 ein Drucksignal an das Ventilelement 10a übermittelt und dieses entsperrt, um einen Rückfluss in die erste Stellorganleitung 23a zu ermöglichen.

Dreht sich also die Pumpe in einer Drehrichtung, bzw. fördert die Pumpe in eine Richtung, die einen Druckaufbau in der ersten Stellorganleitung 23a bewirkt, so wird Fluid durch das Ventilelement 10a in die erste Kammer 3 gefördert. Aufgrund des Druckaufbaus in der ersten Stellorganleitung 23a wird mittels des Steuerventils 21 das Ventilelement 10d in der zweiten Stellorganleitung 23b entsperrt. Mittels der Entsperrung des Ventilelements 10d wird ein Rückfluss von Fluid aus der zweiten Kammer 4 des Stellorgans 2 in die zweite Stellorganleitung 23b ermöglicht.

Mittels dieser Ausgestaltung wird es ermöglicht, eine Kammer zu befüllen und im Wesentlichen gleichzeitig ein Entleeren der anderen Kammer ermöglicht. Die entsprechende technische Funktion wird erreicht, wenn die Pumpe in der anderen Drehrichtung läuft. In diesem Fall wird Druck in der zweiten Stellorganleitung 23b aufgebaut und Fluid zur zweiten Kammer 4 geleitet. Aufgrund des aufgebauten Drucks in der zweiten Stellorganleitung 23b wird mittels des Steuerventils 21 das Ventilelement 10a in der ersten Stellorganleitung 23a entsperrt und ein Rückfluss aus der ersten Kammer 3 ermöglicht.

Es ergibt sich dabei, dass Fluid, welches aus dem Stellorgan abgelassen wird, mittels einer der Stellorganleitungen 23a, 23b mittels der ersten und zweiten Anschlussleitungen 14a, 14b direkt der Pumpe zugeführt wird und von dieser in Richtung zu befüllender Kammer befördert wird. Fluid, welches also aus dem Stellorgan 2 abgelassen wird, wird direkt erneut in das Stellorgan 2 gepumpt ohne zuvor in das Reservoir zu gelangen.

Das Betätigungssystem 1 umfasst ferner ein Reservoir 12 sowie einen Speicher 7. Das Reservoir 12 dient zur Aufnahme von Fluid, welches mittels einer Reservoirleitung 25, die mit der Arbeitsschaltung 5 verbunden ist von der Arbeitsschaltung 5 aus dem Reservoir entnommen werden kann. Das Reservoir und die daran angeschlossene Reservoirleitung 25 können derart gestaltet bzw. miteinander verbunden sein, dass Fluid in jeder möglichen Betriebslage aus dem Reservoir entnommen werden kann. Es ist denkbar, dass das Fluid im Reservoir 12 unter einem vorgegebenen Druck gespeichert sein kann. Die Reservoirleitung 25 ist derart mit der Arbeitsschaltung 5 verbunden, dass Fluid in die Arbeitsschaltung aufgenommen werden kann, jedoch keinerlei Fluid aus der Arbeitsschaltung in die Reservoirleitung und das Reservoir abgegeben werden kann. Hierzu sind im gezeigten Ausführungsbeispiel die Ventilelemente 10e und 10f vorgesehen. Die Ventilelemente 10e, 10f sind derart ausgestaltet, um einen Fluss von Fluid in die Arbeitsschaltung 5 zu ermöglichen, jedoch einen Fluss aus der Arbeitsschaltung 5 in das Reservoir 12 zu verhindern. Bevorzugt sind diese deshalb als Rückschlagventile ausgebildet.

Der Speicher 7 ist als Druckspeicher ausgebildet. In ihm wird Fluid unter Druck aufgenommen. Hierzu ist eine Füllleitung 13 vorgesehen, welche die Arbeitsschaltung 5 mit dem Speicher 7 verbindet. Die Füllleitung 13 ist derart mit der Arbeitsschaltung 5 verbunden, dass unter Druck stehendes Fluid aus der Arbeitsschaltung 5 in den Speicher 7 geleitet werden kann. Ein Fluss von Fluid aus dem Speicher 7 in die Arbeitsschaltung 5 wird jedoch mittels mindestens eines Ventilelements verhindert. Im gezeigten Ausführungsbeispiel wird ein Rückfluss von Hydraulikfluid in die Arbeitsschaltung 5 mittels zweier Ventilelemente 10b, 10c verhindert. Anders ausgedrückt, ist der Speicher von der Arbeitsschaltung 5 derart entkoppelt, dass ein Fluss aus dem Speicher in die Arbeitsschaltung 5 verhindert ist. Diese Entkopplung wird im gezeigten Ausführungsbeispiel mittels der Ventilelemente 10b und 10c erreicht, wobei jedoch auch nur die Nutzung eines einzigen Ventilelements vorstellbar wäre.

Das Stellorgan 2 ist mittels der Ventilelemente 10a, 10d von der Arbeitsschaltung 5 entkoppelt. Die Entkopplung geschieht dabei derart, dass ein Rückfluss in die Arbeitsschaltung bei gesperrten Ventilelementen 10a, 10d nicht möglich ist.

Vom Speicher 7 verläuft eine Speicherleitung 26 in Richtung der ersten Kammer 3 des Stellorgans 2. In der Speicherleitung 26 ist im gezeigten Ausführungsbeispiel eine Drossel 27 positioniert. Des Weiteren ist in der Speicherleitung 26 ein Schaltventil 8 positioniert. Das Schaltventil 8 ist im gezeigten Ausführungsbeispiel als Drei/Zwei-Wegeventil ausgeführt. Dabei resultieren zwei Anschlüsse von der Speicherleitung 26, welche durch das Schaltventil 8 unterbrochen ist. Die dritte Anschlussleitung ist eine zweite Reservoirleitung 28, welche vom Schaltventil 8 zum Reservoir 12 verläuft. Die Schaltzustände des Schaltventils 8 sind derart gewählt, dass in der als Durchgangsstellung bezeichneten Position die Speicherleitung 26 nicht unterbrochen ist, und ein Fluss von Fluid aus dem Speicher 7 in Richtung der ersten Kammer 3 des Stellorgans 2 ermöglicht ist. Das Schaltventil 8 ist derart ausgestaltet, dass diese Durchgangsschaltung mittels einer Feder erreicht wird, und deshalb auch bei Ausfall der Steuerung bzw. Stromausfall erreicht wird. Eine weitere Schaltstellung, Sperrstellung genannt, sperrt den Zufluss aus dem Speicher 7 und verbindet die zweite Reservoirleitung 28 mit dem Bereich der Speicherleitung 26, der vom Schaltventil 8 in Richtung der ersten Kammer 3 verläuft. Diese Schaltstellung wird im gezeigten Ausführungsbeispiel mittels eines magnetischen Aktors erreicht. Des Weiteren umfasst die Speicherleitung 26 ein Sperrorgan 29, welches einen Fluss von Fluid in Richtung des Stellorgans 2 zulässt, jedoch einen Fluss aus Richtung des Stellorgans 2 in Richtung des Speichers 7 verhindert. Die Speicherleitung 26 mündet in einen ersten Leitungsbereich 30a. Der erste Leitungsbereich 30a verbindet die erste Kammer 3 mit der Speicherleitung 26 sowie mit dem Ventilelement 10a, an welches die erste Stellorganleitung 23a angeschlossen ist.

Das Betätigungssystem 1 umfasst des Weiteren eine Abflussleitung 11, welche mit einem Leitungsbereich 30b verbunden ist. Der zweite Leitungsbereich 30b verbindet die zweite Kammer 4 mit dem Ventilelement 10d, an welchem die zweite Stellorganleitung 23b angeschlossen ist und die Abflussleitung 11. In der Abflussleitung 11 ist ein Ablassventil 9 angeordnet. Das Ablassventil 9 ist derart ausgestaltet, dass dieses mit Federkraft in einer geschlossenen Stellung gehalten ist. D.h., das Ablassventil 9 ist in seiner Grundstellung in einer Sperrstellung.

Das Ablassventil 9 weist eine Überdruckschaltung 31 auf. Erhöht sich der Druck in der zweiten Kammer 4a auf ein unzulässiges Maß, so bewirkt die Überdruckschaltung 31 ein Öffnen des Ablassventils 9, wodurch Fluid abgelassen und der Druck verringert wird. Üblicherweise liegt dieser Druck bei ca. 250 bar. Das Ablassventil 9 dient deshalb als Druckbegrenzungsventil. Zwischen der Speicherleitung 26 und dem Ablassventil 9 besteht eine Signalverbindung 32. Die Signalverbindung 32 ist bevorzugt als Fluidleitung mit geringem Durchmesser ausgestaltet. Die Fluidleitung wird nur zur Druckübertragung genutzt, wobei kein oder ein nur sehr geringer Fluidstrom vorliegt. Die Signalverbindung 32 ist an der Speicherleitung 26 im gezeigten Ausführungsbeispiel stromabwärts des Schaltventils 8 vor dem Sperrorgan 29 angeschlossen. Alternativ kann die Signalverbindung 32 auch auf andere Weise angeschlossen werden, wobei sichergestellt sein muss, dass die Signalverbindung 32 nur dann mit Druck beaufschlagt wird, wenn auch das Schaltventil 8 in Durchflussstellung gebracht ist, d.h. der Speicher 7 in Verbindung mit der ersten Kammer 3 gebracht ist. Mittels der Signalverbindung 32 kann das Ablassventil 9 in die geöffnete, d.h. die Durchflussstellung, gebracht werden. Ist der Speicher 7 mit dem Stellorgan verbunden, so wird ein Drucksignal mittels der Signalverbindung 32 an das Ablassventil 9 übertragen, was dessen Öffnung bewirkt. Die Signalverbindung 32 kann auch auf andere geeignete Weise erfolgen und muss nicht notwendigerweise als Fluidverbindung geschaltet sein.

Die Abflussleitung 11 mündet stromabwärts des Ablassventils 9 in das Reservoir 12. Im gezeigten Ausführungsbeispiel mündet die Leckleitung in die Abflussleitung 11. Leckagefluid aus der Pumpe kann damit über die Leckleitung 22 in Richtung Reservoir abfließen. Alternativ kann die Leckleitung 22 auch direkt mit dem Reservoir verbunden sein. Auch bei einer Verbindung zwischen Abflussleitung 11 und Leckleitung 22 ist dies nicht als Aufhebung einer Entkopplung zwischen Abflussleitung 11 und Arbeitsschaltung 5 zu verstehen. Üblicherweise fließt durch die Leckleitung 22 kein oder nur ein sehr geringer Fluidstrom und ist deshalb für die eigentliche Funktion der Arbeitsschaltung 5 und der Abflussleitung 11 nicht von Bedeutung. Bevorzugt mündet die Leckleitung 22 direkt in das Reservoir 12.

Im gezeigten Ausführungsbeispiel sind Reservoirleitung 25, zweite Reservoirleitung 28 und Abflussleitung 11 miteinander verbunden, bevor diese gemeinsam in das Reservoir 12 münden. Diese Ausgestaltung ist jedoch nicht zwingend, da auch jede andere geeignete Fluidverbindung dieser Leitungen mit dem Reservoir 12 für deren Funktion ausreichend ist.

Im Folgenden werden anhand der weiteren Figuren weitere Ausführungsformen des Betätigungssystems näher erläutert. Es soll im Folgenden nur auf die wesentlichen Unterschiede zum vorangegangenen Ausführungsbeispiel eingegangen werden. Deshalb werden für gleiche und wirkungsgleiche Bauelemente gleiche Bezugsziffern verwendet und entsprechend auf die vorangegangene Beschreibung verwiesen. Die folgenden Ausführungen und Erklärungen treffen auch auf die Ausführungsform der Fig. 1 zu, sofern dies nicht ausdrücklich ausgeschlossen wird.

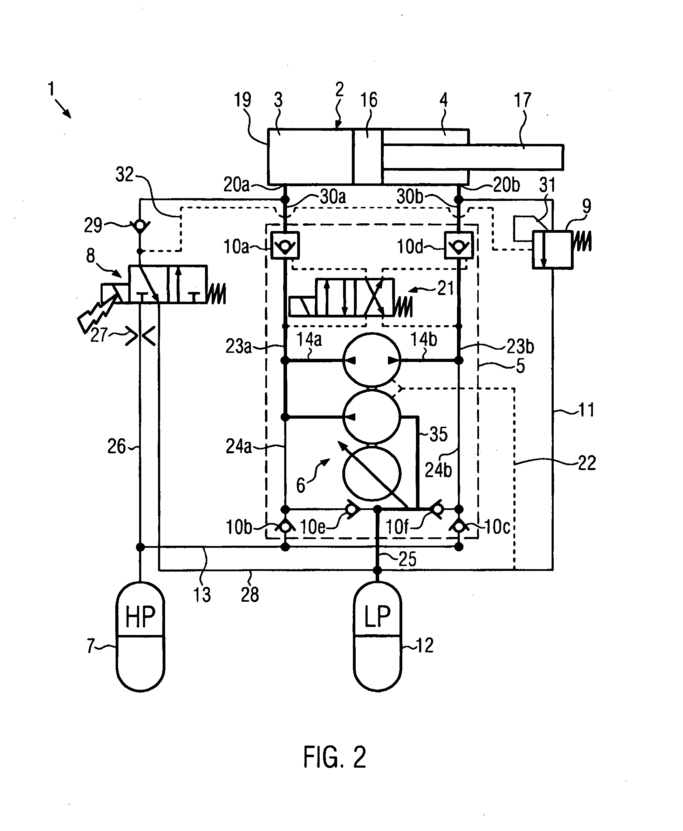

Im gezeigten Ausführungsbeispiel der Fig. 2 wird ein Stellorgan 2 genutzt, welches lediglich einen Kolben 17 aufweist, der sich zu lediglich einer Seite aus dem Gehäuse 19 erstreckt. Des Weiteren nutzt das Betätigungssystem dieses Ausführungsbeispiels eine Motor-/Pumpenvorrichtung 6 mit einem Motor und zwei Pumpen. Eine Pumpe ist dabei als einseitig wirkende Pumpe ausgeführt, d.h. als Pumpe die lediglich bei einer Drehrichtung Fluid fördert. Die zweite Pumpe ist als drehrichtungsvariable Pumpe ausgelegt, d.h. diese Pumpe fördert sowohl in einer ersten Drehrichtung als auch in einer zweiten Drehrichtung, wobei Saug- und Druckseite dieser Pumpe bei Drehrichtungswechsel ebenfalls wechseln. Die Motor-/Pumpenvorrichtung ist derart ausgelegt, dass in einer ersten Drehrichtung beide Pumpen Fluid mittels der ersten Stellorganleitung 23a in Richtung der ersten Kammer 3 des Stellorgans 2 fördern. In der zweiten Drehrichtung fördert lediglich eine der beiden Pumpen über die zweite Stellorganleitung 23b Fluid in Richtung der zweiten Kammer 4. Dabei ist die Anordnung derart gewählt, dass sich der Kolben 17 des Stellorgans 2 durch die zweite Kammer 4 erstreckt und das Volumen der zweiten Kammer 4 entsprechend um das Volumen des hindurch verlaufenden Kolbens 17 verringert ist. Entsprechend ist auch die Wirkfläche auf dem Stempel 16 verringert, auf den das Fluid in der Kammer 4 wirkt, da die Befestigungsfläche des Kolbens 17 am Stempel 16 dessen freie Fläche verringert. Entsprechend ist das Volumen der ersten Kammer 3 im Vergleich zur zweiten Kammer 4 größer. Ebenso steht am Stempel 16 in der ersten Kammer 3 eine größere Wirkfläche für das Fluid zur Verfügung. Das Stellorgan kann deshalb als Differentialkolben bezeichnet werden.

Die Pumpen sind deshalb derart angeordnet, dass in der ersten Drehrichtung, in der beide Pumpen Fluid fördern, das Fluid in die erste Kammer 3 gefördert wird, wohingegen in der zweiten Drehrichtung, in der lediglich eine Pumpe Fluid fördert, dieses Fluid in die zweite Kammer 4 gefördert wird.

Im Ausführungsbeispiel der Fig. 2 umfasst die Arbeitsschaltung 5 eine Saugleitung 35, welche an die Reservoirleitung 25 angeschlossen ist. Die Definition der Arbeitsschaltung 5 des Ausführungsbeispiels der Fig. 2 umfasst deshalb zusätzlich zu den Elementen der Arbeitsschaltung nach Fig. 1 auch die Saugleitung 35.

Im Folgenden soll die Funktionsweise des Betätigungssystems dargestellt werden. Die Funktionsweise ist dabei in allen Ausführungsformen identisch, soweit nicht gesondert darauf hingewiesen wird.

In Fig. 2 wird die Funktion des Betätigungssystems im Betriebszustand dargestellt. Hierzu sind die Fluidleitungen, in denen im Betriebszustand üblicherweise Fluid fließt bzw. fließen kann, markiert, d.h. verdickt dargestellt. Allerdings kann aus dieser Darstellung nicht geschlossen werden, dass in nicht markierten Fluidleitungen kein Fluss erfolgt. Die Markierung dient nur der besseren Darstellung und lässt keine Rückschlüsse auf die Notwendigkeit oder Funktion der Leitungen zu.

Als Betriebszustand wird der gewöhnliche Betrieb des Betätigungssystems angesehen, in dem der Kolben des Stellorgans 2 mittels der Motor-/Pumpenvorrichtung ein- und ausgefahren werden kann.

Im Betriebszustand ist das Ablassventil 9 geschlossen, so dass kein Fluid aus der zweiten Kammer 4 mittels der Abflussleitung 11 in das Reservoir 12 abfließen kann. Die Speicherleitung 26 ist mittels des Schaltventils 8 geschlossen, d.h. die Speicherleitung 26 ist unterbrochen, so dass kein Fluidfluss vom Speicher in Richtung der ersten Kammer 3 erfolgen kann. Hierfür ist das Schaltventil 8 bestromt, so dass dieses sich hinsichtlich der Speicherleitung 26 in Sperrstellung befindet. Im Betriebszustand treibt der Motor die Pumpe (Fig. 1) oder die Pumpen (Fig. 2) an, wobei abhängig von der Drehrichtung wie bereits zuvor beschrieben, Fluid entweder in Richtung der ersten Kammer 3 oder der zweiten Kammer 4 geleitet wird. Wird Fluid in die erste Stellorganleitung 23a gepumpt, so fließt dieses durch das Ventilelement 10a, dem ersten Leitungsbereich 30a, der Anschlussverbindung 20a in die erste Kammer 3. Zugleich wird mittels des Steuerventils 21, das sich in Kreuzschaltung befindet, das Ventilelement 10d entsperrt, womit ein Rückfluss von Fluid aus der Kammer 4 in die zweite Stellorganleitung 23b zur Motor-/Pumpenvorrichtung ermöglicht ist. Mit Befüllung der ersten Kammer 3 ergibt sich demnach eine Entleerung der zweiten Kammer 4 und eine Ausfahrbewegung des Kolbens 17 mit entsprechender Positionsveränderung des Stempels 16. Durch die Tatsache, dass das aus einer Kammer abgelassene Fluid wieder der Pumpe zugeführt wird und in die andere Kammer umgepumpt wird, ergibt sich üblicherweise kein Fluidverlust. Sollte dennoch ein Mangel an Fluid entstehen, so kann über die Reservoirleitung 25 und die Ventilelemente 10e und 10f bzw. mittels der Saugleitung 35 (Fig. 2) Fluid nachgesaugt werden. Im Betriebszustand geschieht die Betätigung des Stellorgans 2 lediglich mittels der Arbeitsschaltung 5.

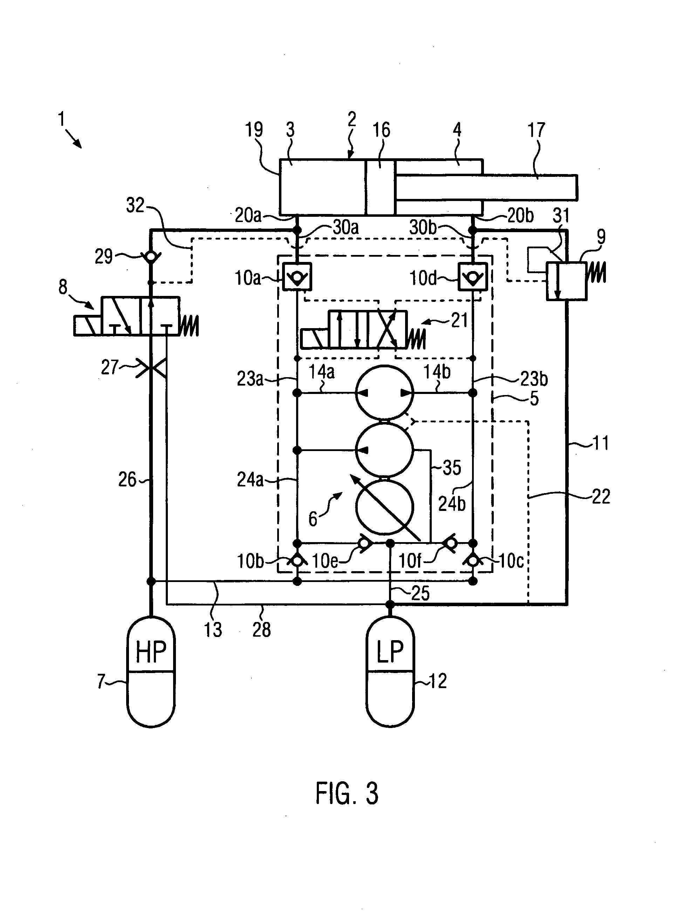

Fig. 3 zeigt das Betätigungssystem in einem Störungszustand. Als Störungszustand ist dabei ein Ausfall der Motorpumpeneinheit, ein Stromausfall oder eine Leckage in der Arbeitsschaltung zu verstehen. Allgemein ausgedrückt, kann unter einem Störungszustand ein Zustand des Betätigungssystems verstanden werden, in dem die Arbeitsschaltung nicht in der Lage ist, das Stellorgan in die sichere Stellung zu bringen.

Das Stellorgan muss in die sichere Stellung gebracht werden, wenn die Arbeitsschaltung nicht mehr in der Lage ist das Stellorgan kontrolliert zu steuern bzw. zu regeln oder wenn äußere Umstände dies erfordern. Ein äußerer Umstand, der ein Überführen des Stellorgans in die Sicherheitsstellung erfordert, könnte beispielsweise vorliegen, wenn das Betätigungssystem als Verstelleinheit für ein Rotorblatt einer Windkraftanlage eingesetzt ist. Treten Windgeschwindigkeiten auf, die die vorgesehenen Belastungsgrenzen der Anlage überschreiten, so müssen die Rotorblätter in eine sichere Stellung gebracht werden. Die Rotorblätter bieten in dieser sicheren Stellung dem Wind eine geringere Angriffsfläche, wodurch die Belastungen der Gesamtanlage verringert wird. In den gezeigten Ausführungsbeispielen ist die Sicherheitsstellung diejenige Position des Stellorgans in der der Kolben 17 vollständig ausgefahren ist. In Abhängigkeit vom Einsatzzweck des Betätigungssystems kann jedoch auch eine andere Position des Kolbens 17 als Sicherheitsstellung definiert werden.

Im Störungszustand schaltet das Schaltventil 8 derart, dass der Speicher 7 mittels der Speicherleitung 26 mit der ersten Kammer 3 verbunden ist. Um dies zu erreichen, ist das Schaltventil 8 mit einer Feder vorgespannt, so dass z.B. bei Stromausfall das Schaltventil 8 in die korrekte Position geschoben wird. Hierbei ist anzumerken, dass auch elektrische Sensoren oder sonstige Sensoren vorgesehen sein können, die einen Störungszustand erkennen und ein entsprechendes Signal hervorrufen, die die Einnahme der Sicherheitsstellung bewirken. Hierdurch wird das Schaltventil 8, welches während des Betriebszustands, z.B. mittels eines Elektromagneten in Sperrstellung gehalten wird, vom Stromkreis getrennt, so dass mittels der Feder die Durchflussstellung eingenommen werden kann.

Ist das Schaltventil 8 in Durchflussstellung gebracht, so fließt unter Druck stehendes Fluid in die erste Kammer 3. Mittels der Signalverbindung 32 wird das Ablassventil 9 in Durchflussstellung gebracht, so dass Fluid aus der zweiten Kammer 4 mittels der Abflussleitung 11 in das Reservoir 12 abfließen kann. Die Ventilelemente 10a, 10d sind hierbei geschlossen und verhindern einen Fluss von Fluid sowohl von der zweiten Kammer 4 durch das Ventilelement 10d in die Arbeitsschaltung als auch einen Fluss von unter Druck stehendem Fluid aus dem Speicher 7 in die Arbeitsschaltung 5 über das Ventilelement 10a.

Das unter Druck stehende Fluid aus dem Speicher 7 fließt in die erste Kammer 3 und verdrängt den Stempel 16 und damit auch das Fluid in der zweiten Kammer 4. Dies führt zu einer Ausfahrbewegung des Kolbens 17, wodurch sich dieser in die Sicherheitsstellung begibt. Die Ausfahrbewegung des Kolbens 17 wird mittels der Drossel 27 in der Speicherleitung 26 gesteuert. Abhängig von der Wahl der Drossel kann die Fließgeschwindigkeit in die erste Kammer 3 gewählt werden. Zudem besteht grundsätzlich auch die Möglichkeit auf die Drossel 27 zu verzichten.

Sofern die Arbeitsschaltung 5 nicht vollständig ausgefallen ist, kann die Einnahme der Sicherheitsstellung auch durch die Arbeitsschaltung 5 unterstützt werden. Hierbei fördert die Motor-/Pumpenvorrichtung Fluid in Richtung der ersten Kammer 3. Das Ventilelement 10a ist derart ausgelegt, dass Fluid in Richtung der ersten Kammer 3 geleitet wird, jedoch ein Fluss in die Arbeitsschaltung 5 durch das Ventilelement 10a hindurch nicht möglich ist.

Sofern die Arbeitsschaltung 5 jedoch vollständig ausgefallen ist und zum Überführen des Stellorgans 2 in die Sicherheitsstellung nicht zur Verfügung steht, bildet die Sicherheitsschaltung wie in Fig. 3 zu erkennen, eine redundante Betätigungsmöglichkeit für das Stellorgan 2. Sowohl Fluidversorgung als auch Fluidabfluss sind vollständig redundant ausgeführt und arbeiten unabhängig von der Arbeitsschaltung 5. Die Sicherheitsschaltung kann deshalb als Bypass zur Arbeitsschaltung 5 angesehen werden. Der Aufbau der Arbeitsschaltung ist für die Funktion des störungssicheren Betätigungssystems grundsätzlich nicht relevant, sofern die zuvor beschriebene Entkopplung geschaffen ist. Die Arbeitsschaltung kann deshalb auch als Modul angesehen werden, das unabhängig von der Sicherheitsschaltung ausgewechselt oder an die jeweiligen Gegebenheiten angepasst werden kann.

Mittels der Ventilelemente 10a, 10b, 10c, 10d, 10e, 10f ist sichergestellt, dass aus dem Speicher 7 keinerlei Fluid bzw. Druck in der Arbeitsschaltung 5 verloren geht, sondern vollständig zur Betätigung des Stellorgans 2 zur Verfügung steht.

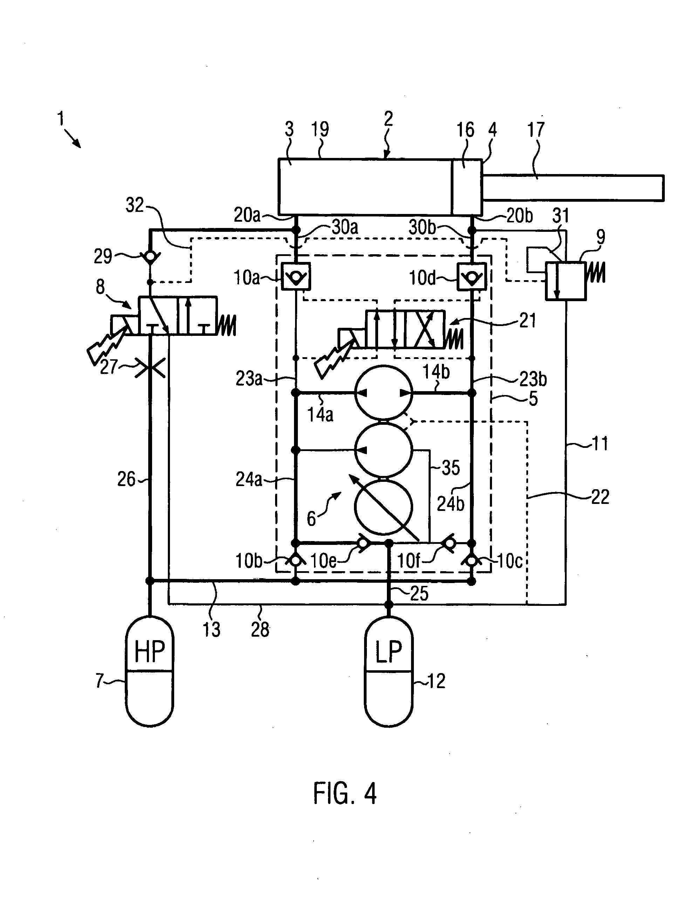

Fig. 4 zeigt die Befüllung des Speichers 7. Das Stellorgan 2 befindet sich in der Sicherheitsstellung, d.h. der Kolben 17 ist vollständig ausgefahren. Der Kolben kann bei Befüllung des Speichers (7) jedoch auch in beliebiger Position festgesetzt sein. Das Steuerventil 21 befindet sich in Parallelschaltung. Das Schaltventil 8 ist derart geschalten, dass die Speicherleitung 26 zur ersten Kammer 3 unterbrochen ist. Die Motor-/Pumpenvorrichtung fördert in die zweite Stellorganleitung 23b, wobei sich der Druck bzw. Fluidfluss fortsetzt in die zweite Fluidleitung 24b. Das in die zweite Stellorganleitung 23b geförderte Fluid gelangt mittels des Ventilelements 10d in die zweite Kammer 4. Da sich das Steuerventil 21 in Parallelschaltung befindet, hat das Ventilelement 10a die Funktion eines Rückschlagventils. Aufgrund des gesperrten Ventilelements 10a kann das in der ersten Kammer 3 befindliche Fluid nicht abfließen, weshalb sich in der ersten Kammer 3 ein Gegendruck zum Fluiddruck in Kammer 4 aufbaut und eine Bewegung des Kolbens 17 verhindert ist. Der mittels der Motor-/Pumpenvorrichtung aufgebaute Fluiddruck setzt sich mittels der zweiten Fluidleitung 24b fort und führt zu einem Fluss von Fluid durch das Ventilelement 10c und die Füllleitung 13 zum Speicher 7. Das hierzu benötigte Fluid wird aus dem Reservoir 12 mittels der Fluidleitung 25 durch das Ventilelement 10e in die erste Fluidleitung 24a und in die erste Anschlussleitung 14a zur Motor-/Pumpenvorrichtung gesaugt. Dies geschieht so lange, bis der notwendige bzw. vorgegebene Fülldruck im Speicher erreicht ist. Dieser Fülldruck liegt ca. im Bereich von 150 bis 250 bar. Hierzu kann ein Drucksensor im Speicher 7, der Füllleitung 13 oder der Speicherleitung 26 vorgesehen sein.

Ist der Speicher gefüllt, so bleibt das Schaltventil 8 in der Sperrstellung, um ein Entleeren des Speichers 7 in die erste Kammer 3 zu verhindern. Die Ventilelemente 10b und 10c verhindern einen Druckverlust in die Arbeitsschaltung mittels der Füllleitung 13. Das Steuerventil 21 wird wieder in Kreuzschaltung gebracht.

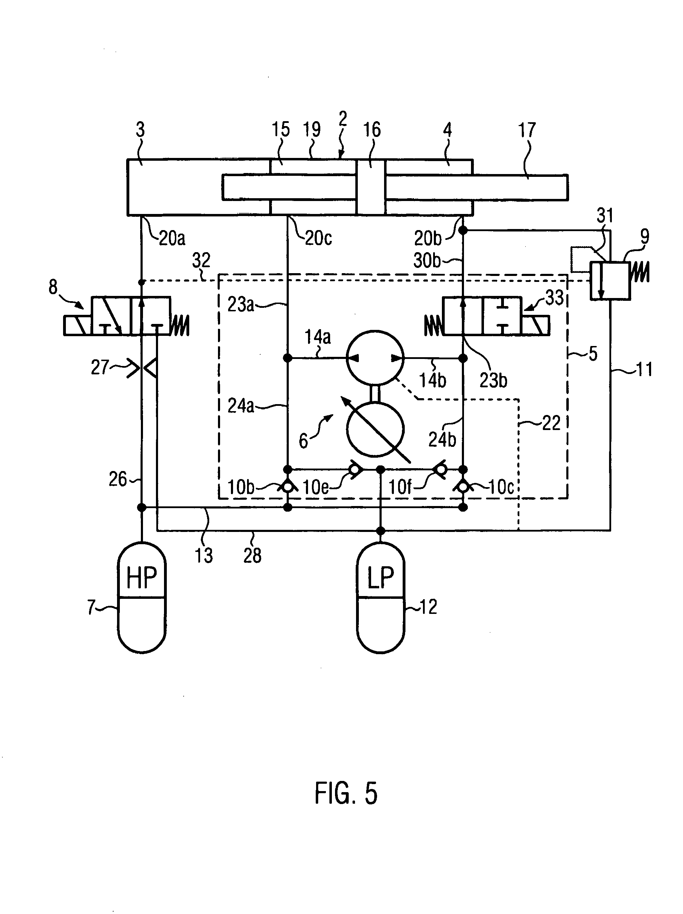

Fig. 5 zeigt eine erfindungsgemäße Ausführungsform des Betätigungssystems. Das Betätigungssystem dieser Ausführungsform weist ein Stellorgan mit drei Kammern auf. Zusätzlich zur ersten und zweiten Kammer 3, 4 weist dieses Stellorgan eine dritte Kammer 15 auf. Das Betätigungssystem ist derart ausgestaltet, dass die Speicherleitung 26 in die erste Kammer 3 mündet. Die erste Stellorganleitung 23a mündet in die dritte Kammer 15 und die zweite Stellorganleitung 23b mündet in die zweite Kammer 4. Der Sicherheitsschaltung ist also die erste Kammer 3 zugeordnet und der Arbeitsschaltung sind die zweite und dritte Kammer 4, 15 zugeordnet. D.h. die Arbeitsschaltung steht mit der zweiten und dritten Kammer 4, 15 in Kontakt. Bevorzugt weisen die Kolbenflächen, auf welche das Fluid in der Kammern der Arbeitsschaltung wirkt, also die zweite und dritte Kammer 4, 15 die gleiche Flächengröße auf.

Da für die Sicherheitsschaltung eine separate Kammer im Stellorgan vorgesehen ist, ist sogar eine Redundanz hinsichtlich der zur Betätigung notwendigen Kammern des Stellorgans erreicht. Hinsichtlich des Zuflusses zum Stellorgan sind Arbeitsschaltung und Sicherheitsschaltung vollständig entkoppelt, da die Zuleitungen keinerlei Verbindung zueinander haben. Eine Störung der Arbeitsschaltung, welche die Funktionsfähigkeit der zugehörigen Kammern 4, 15 beeinträchtigt, hat auf Grund der vollständigen Trennung der ersten Kammer 3 deshalb keine Auswirkung auf die Sicherheitsschaltung.

An die zweite Stellorganleitung 23b schließt sich ein Füllventil 33 an. Das Füllventil 33 ist im Betriebszustand in Durchflussstellung gebracht. Abhängig von der Drehrichtung der Pumpe kann dann der zweiten Kammer 4 oder der dritten Kammer 15 Fluid zugeführt werden, wobei aus der jeweils anderen Kammer Fluid abgelassen wird.

Abweichend zu den bisher beschriebenen Ausführungsformen ist die Arbeitsschaltung 5 des Ausführungsbeispiels in Fig. 5 mittels des Füllventils 33 und der Anschlussverbindung 20c begrenzt, wobei das Füllventil 33 als Element der Arbeitsschaltung 5 angesehen wird.

Soll der Speicher gefüllt werden, wird der Kolben 17 gesperrt, d.h. in seiner Position festgesetzt. Das Füllventil 33 ist in Sperrstellung gebracht. Die Pumpe fördert Fluid in Richtung der zweiten Stellorganleitung 23b, wobei der Durchfluss jedoch durch das gesperrte Füllventil 33 gesperrt ist. Das Fluid fließt auch in die zweite Fluidleitung 24b durch das Ventilelement 10c in die Füllleitung 13. Das Schaltventil 8 befindet sich während des Füllvorgangs in Sperrstellung, d.h. die Speicherleitung 26 ist in Richtung der ersten Kammer 3 unterbrochen. Fluid fließt deshalb in den Speicher 7. Nach Füllen des Speichers verhindern die Ventilelemente 10b und 10d einen Rückfluss von Fluid aus dem Speicher in die Arbeitsschaltung 5. Das Schaltventil 8 bleibt weiterhin geschlossen. Das Füllventil 33 wird in Durchflussstellung gebracht, woraufhin die Arbeitsschaltung 5 den Kolben 17 steuern bzw. regeln kann.

Während des Füllvorgangs wird Fluid aus dem Reservoir 12 mittels der Reservoirleitung 25 durch das Ventilelement 10e in die erste Fluidleitung 24a und die erste Anschlussleitung 14a zur Motor-/Pumpenvorrichtung 6 gesaugt.

Im Betriebszustand kann der Kolben 17 und Stempel 16 innerhalb des Gehäuses 19 des Stellorgans 2 verfahren werden. Dabei ändert sich auch das Volumen der ersten Kammer 3. Hierfür ist die erste Kammer 3 mittels des Schaltventils 8 mit der zweiten Reservoirleitung 28 verbunden, über welche Fluid aus dem Reservoir angesaugt werden kann, wenn sich das Volumen der ersten Kammer 3 vergrößert und Fluid an das Reservoir abgegeben werden, wenn sich das Volumen der ersten Kammer 3 verkleinert. Durch diese Ausgestaltung wird also verhindert, dass sich ein Überdruck bzw. ein Unterdruck in der Kammer 3 aufbaut und die Funktion des Stellorgans 2 behindert.

Im Störungszustand wird das Schaltventil 8 in Durchflussstellung gebracht, so dass der Speicher 7 mittels der Speicherleitung 26 mit der ersten Kammer 3 in Verbindung gebracht ist. Mittels der Signalverbindung 32 wird ein Öffnungssignal an das Ablassventil 9 übermittelt, welches öffnet. Das aus dem Speicher 7 in die erste Kammer 3 strömende Fluid verdrängt den Stempel 16 und führt zum Ausführen des Kolbens 17 in die Sicherheitsstellung. Entsprechend muss in die dritte Kammer 15 Fluid zugeführt werden, um einen Unterdruck zu vermeiden. Dieses notwendige Fluid kann aus dem Reservoir 12 mittels der Reservoirleitung 25 durch das Ventilelement 10e, die erste Fluidleitung 24a sowie die erste Stellorganleitung 23a zugeführt werden. Alternativ kann das Fluid für die dritte Kammer 15 auch über die still stehende Motor-/Pumpenvorrichtung zugeführt werden, in dem Fluid durch die still stehende Pumpe fließt, wenn in der zweiten Stellorganleitung 23b wie im Ausführungsbeispiel in Fig. 5 gezeigt, auf ein den Rückfluss aus der zweiten Kammer 4 verhinderndes Ventilelement verzichtet wird.

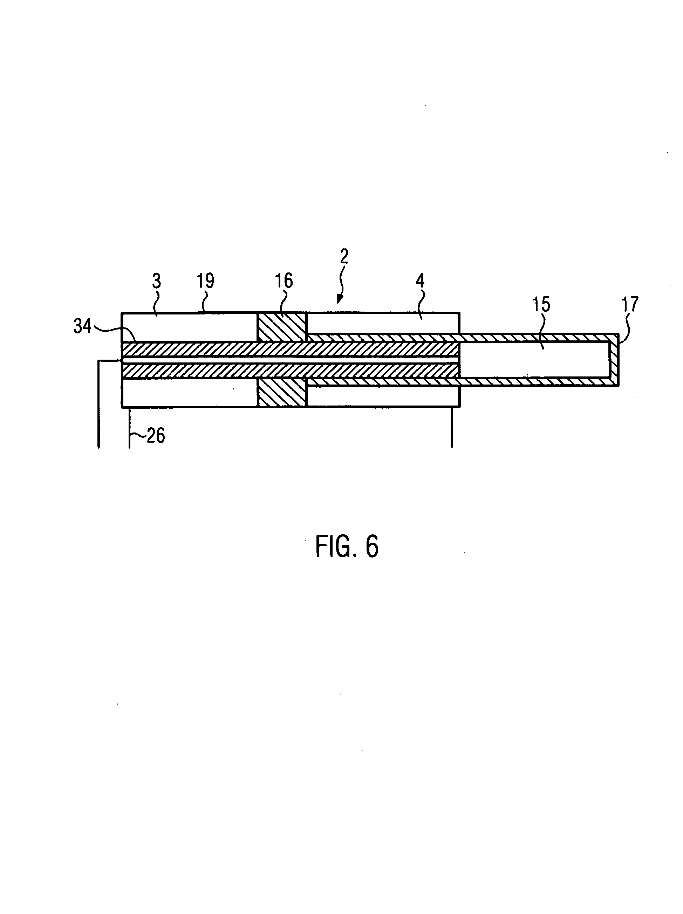

In Fig. 6 ist ein Stellorgan mit drei Kammern zu sehen, wie es für die Ausführungsform in Fig. 5 genutzt werden könnte. Dabei ist der Kolben 17 hohl ausgeführt, um eine dritte Kammer 15 aufzunehmen. Um einen von der ersten Kammer 3 abgetrennten Zufluss zur dritten Kammer 15 zu ermöglichen, ist in das Gehäuse 19 des Stellorgans 2 eine Hülse 34 eingesetzt. Durch die Hülse 34 wird die Kammer 15 mit Fluid versorgt. Der hohle Kolben 17 gleitet auf der Hülse und schließt mit dieser dichtend ab.

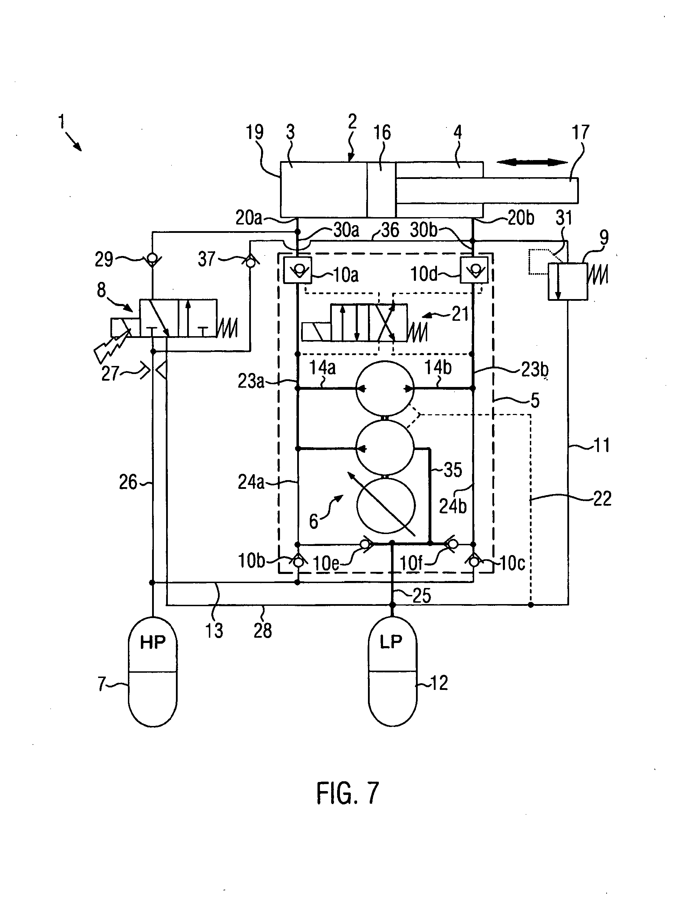

Anhand der Fig. 7 bis 9 wird nunmehr eine weitere Variante eines Betätigungssystems 1 beschrieben. Dieses Betätigungssystem 1 ist vom Grundaufbau her im Wesentlichen identisch zu dem Betätigungssystem 1, das anhand der Figuren 2 bis 4 beschrieben wurde. Im Folgenden wird nur auf die wesentlichen verbleibenden Unterschiede eingegangen und daher auf die ansonsten weiterhin gültige Beschreibung des in den Fig. 2 bis 4 Gezeigten mit Hilfe gleicher Bezugsziffern Bezug genommen.

Ein wesentlicher Unterschied besteht in der Ableitung des Hydraulikfluids aus der zweiten Kammer 4. Das Ablassventil 9 dient bei dem in den Fig. 7 bis 9 gezeigten Betätigungssystem 1 ausschließlich als Überdruckventil und stellt somit eine Absicherung des Systems dar. Eine Signalverbindung 32, wie in dem Betätigungssystem der Fig. 2 bis 4 ist demnach nicht vorhanden. Dafür zweigt nachfolgend der Anschlussverbindung 20b eine Kurzschlussfluidverbindung 36 ab, die in die Speicherleitung 26 mündet. In dem Ausführungsbeispiel mündet die Kurzschlussfluidverbindung 36 in die Speicherleitung 26 zwischen der Drossel 27 und dem Schaltventil 8. Damit der Speicher 7 nicht in die Kammer 4 fördern kann, ist in der Kurzschlussfluidverbindung 36 ein Rückschlagventil 37 angeordnet. Die Kurzschlussfluidverbindung 36 zweigt zwischen der Anschlussverbindung 20b und dem Ventilelement 10d ab, so dass weiterhin eine Trennung zwischen Speicher 7 und der Arbeitsschaltung 5 gegeben ist.

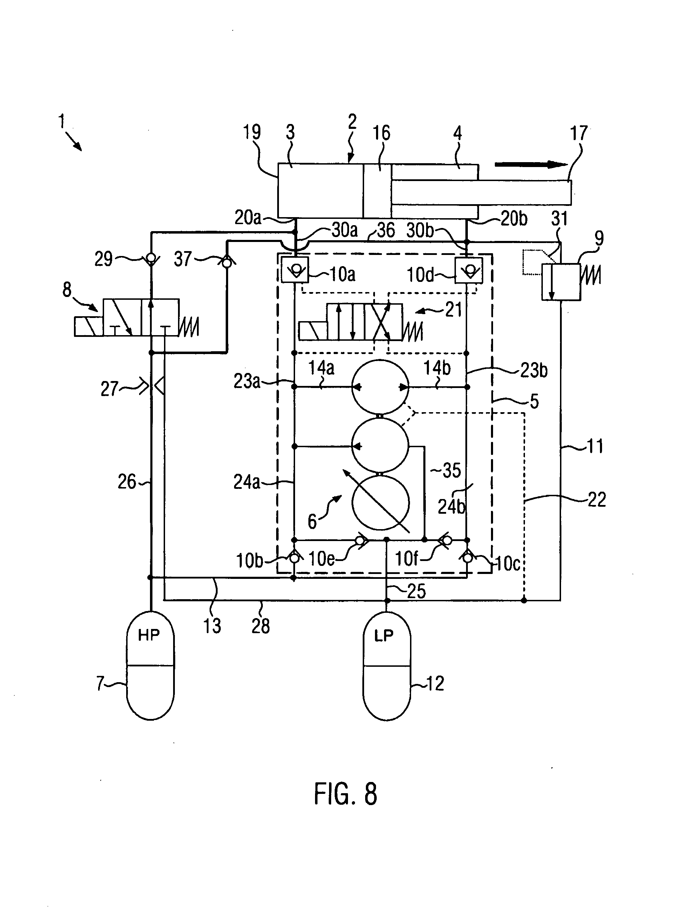

Aufgrund dieser Ausgestaltung der Kurzschlussfluidverbindung 36 dient das Schaltventil 8 gleichzeitig als Kurzschlussventil, weil das Schaltventil 8 ausschließlich in der Sicherheitsstellung, die in Fig. 8 gezeigt ist, die zweite Kammer 4 mit der ersten Kammer 3 kurzschließt, so dass das aus der Kammer 4 verdrängte Hydraulikfluidvolumen durch die Kurzschlussfluidverbindung 36, das Schaltventil 8, das Sperrorgan 29 zu der Anschlussverbindung 20a und in die erste Kammer 3 fließt. Dieser Volumenstrom unterstützt somit den aus dem Speicher 7 herausfließenden Volumenstrom, so dass mit einer geringeren Hydraulikfluidmenge aus dem Speicher 7 eine vollständige Befüllung der ersten Kammer 3 gelingt. Eine solche Ausgestaltung eignet sich besonders gut für den dargestellten Differentialkolben (Stellorgan 2).

In der Fig. 7 ist der Normalbetrieb dargestellt, bei dem über die fett eingezeichneten Verbindungen und mittels der Arbeitsschaltung 5 entweder die erste Kammer 3 oder die zweite Kammer 5 befüllt wird. Hierzu ist der Solenoid des Schaltventils 8 aktiviert und der Speicher 7 von der ersten Kammer 3 getrennt und die Kurzschlussfluidverbindung 36 gesperrt.

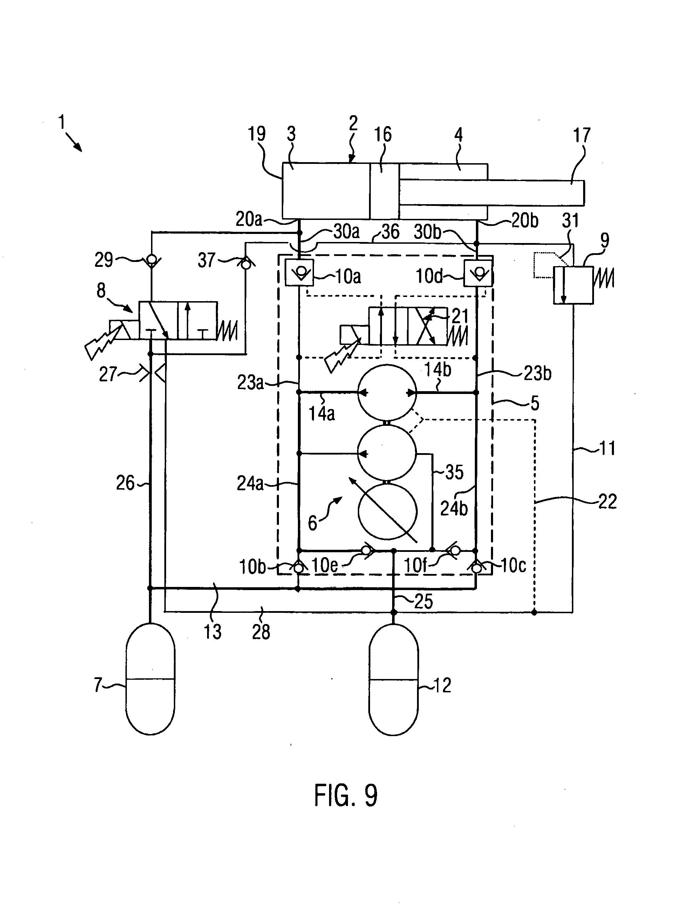

In Fig. 9 ist die Situation dargestellt, bei der das Stellorgan 2 in seiner Position hydraulisch blockiert ist und die Motor-/Pumpenvorrichtung 6 den Speicher 7 befüllt. Hierzu sind sowohl der Solenoid des Stellventils 8 als auch der Solenoid des Steuerventils 21 aktiviert. Hier bleibt der Speicher 7 von der ersten Kammer 3 getrennt und die Kurzschlussfluidverbindung 36 gesperrt. Des Weiteren bleiben auch die Ventilelemente 10a und 10d gesperrt, so dass kein Hydraulikfluid aus der Kammer 3 und der Kammer 4 abfließen kann, wodurch das Stellorgan 2 in seiner Lage fixiert ist.

Die bereits angesprochene Sicherheitsstellung, die in Fig. 8 dargestellt ist, wird z.B. bei Stromausfall eingenommen, so dass der Speicher 7 mit der ersten Kammer 3 des Stellorgans 2 in Verbindung steht. Die Kurzschlussfluidverbindung 36 ist durchgeschaltet und die zweite Kammer 4 steht mit der ersten Kammer 3 in Fluidverbindung. Nachdem bei z.B. Stromausfall auch die Motor-/Pumpenvorrichtung 6 ausfällt, steht auch an den Ventilelementen 10a und 10d kein Steuerdruck an, so dass diese sperren und eine Entkopplung von der Arbeitsschaltung 5 gegeben ist.

Auch bei diesem Betätigungssystem 1 wird durch die Verwendung von entsprechenden Ventilelementen 10a - 10d an sämtlichen Hauptausgängen, an denen von der Motor/Pumpenvorrichtung 6 erzeugte Förderstrome anstehen können, ein modularer Aufbau erzielt, so dass die Sicherheitsschaltung in der Sicherheitsstellung aus dem Speicher 7 in die erste Kammer 3 fördern kann, wobei die Arbeitsschaltung 5 vollständig hydraulisch entkoppelt ist. Die einzige Strömungsverbindung von der Arbeitsschaltung 5 in die Sicherheitsschaltung besteht mittels der Füllleitung 13, durch die der Speicher 7 mittels der Motor-/Pumpenvorrichtung 6 beladen werden kann.

Das Betätigungssystem kann in einem Verfahren zur Betätigung eines Stellorgans zum Einsatz kommen. Dabei wird während des gewöhnlichen Betriebszustands das Stellorgan mittels der, in die zweite oder dritte Kammer fördernden Arbeitsschaltung betätigt. Sobald ein Störungszustand eintritt, wird das Stellorgan in die Sicherheitsstellung gebracht. Dies umfasst die Schritte: Verbinden des Speichers mit der ersten Kammer des Stellorgans, wobei ein von der Arbeitsschaltung vollständig entkoppelter Zufluss in die erste Kammer geschaffen ist, und Ablassen von Fluid in der zweiten Kammer des Stellorgans mittels des Ablassventils, das hierzu in Durchflussstellung gebracht werden kann.

Bevorzugt wird das beschriebene Betätigungssystem und seine Varianten in einem der in der Einleitung genannten Anwendungsfälle angewendet. D.h., die erfindungsgemäße Ausführungsform des Betätigungssystems eignet sich beispielsweise für Windkraftanlagen zur Einstellung des Anströmwinkels mindestens eines Rotorblattes, für Gas-, Dampfoder Wasserturbinen zur Einstellung der jeweiligen Blattwinkel oder für Anwendungen der Öl- und Gasindustrie, in der Stellorgane genutzt werden, die im Störungszustand in eine Sicherheitsstellung überführt werden müssen.

Insbesondere bei Windkraftanlagen ist es notwendig, die einzelnen Rotorblätter hinsichtlich ihres Anstellwinkels zum Wind verändern zu können. Bei Stürmen kann die maximale Belastbarkeit der Rotorblätter sowie der Gesamtstruktur erreicht werden. Es ist deshalb in diesen Fällen notwendig, die Rotorblätter in eine Sicherheitsstellung zu bringen, in denen diese dem Wind eine möglichst geringe Angriffsfläche bieten. Zudem besteht die Möglichkeit, dass die einzelnen Rotorblätter derart eingestellt werden, dass diese jeweils Drehmomente erzeugen, die sich gegenseitig aufheben und dadurch die Windkraftanlage im Stillstandstand halten. Dabei muss sichergestellt sein, dass diese Sicherheitsstellung(en) absolut zuverlässig erreicht werden. Es muss deshalb auch für den Fall eines Stromausfalls möglich sein, die Sicherheitsstellung vollständig automatisch einzunehmen.

Ähnliche Überlegungen treffen auch für den Einsatz des Betätigungssystems in Gasturbinen zum Verstellen des Gasmassestroms oder in Dampfturbinen zum Verstellen des Dampfmassestroms zu. Auch in solchen Systemen kann es notwendig werden ein Stellorgan zuverlässig in eine Sicherheitsstellung zu bringen. Das erfindungsgemäße Betätigungssystem sowie das Verfahren zur Betätigung eines Stellorgans ist deshalb hierfür ebenfalls einsetzbar.

Das vorgestellte Betätigungssystem hat den Vorteil, dass die Sicherheitsstellung im Störungsfall lediglich mittels der im Speicher gespeicherten Energie erreicht wird. Selbst bei blockierter Pumpe oder zerstörten Leitungen in der Arbeitsschaltung kann das Stellorgan in die sichere Stellung gebracht werden. Das beschriebene Betätigungssystem in all seinen Ausführungsformen kann in einem sehr kleinen Bauraum verwirklicht werden. Es bietet sich deshalb an, bei Einsatz in Windkraftanlagen das Betätigungssystem vollständig im Rotor unterzubringen. Aufwändige und kostspielige Hydraulikdurchführungen vom rotierenden Rotor in das Maschinenhaus sind dadurch unnötig. Lediglich die notwendige Stromversorgung muss sichergestellt sein, was jedoch auf einfache Weise erreichbar ist.

Des Weiteren bieten die Betätigungssysteme mit Ventilelementen 10a, 10d, welche einen Rückfluss von Fluid aus dem Stellorgan in die Arbeitsschaltung verhindern können, die einfache Möglichkeit, das Stellorgan in seiner jeweiligen Position festzusetzen, ohne hierfür Energie aufwenden zu müssen. Sobald also die gewünschte Stellung des Kolbens 17 erreicht ist, kann die Motor-/Pumpenvorrichtung 6 abgeschaltet werden. Da die Ventilelemente 10a, 10d den Rückfluss aus den Kammern 3, 4 verhindern, kann deshalb die Kolbenposition ohne Energieaufwand gehalten werden. Eine solche Funktion zum Festsetzen des Kolbens ist auch in der Ausführungsform der Fig. 5 verwirklicht, wenn das Füllventil 33 in Sperrstellung gebracht ist. Das Festsetzen des Stellorgans bietet sich insbesondere an, wenn es auf Grund geringer Undichtigkeiten notwendig wird den Speicher nachzuladen. Das Steuerventil 21 wird derart geschaltet, dass die Ventilelemente 10a und 10d als Rückschlagventile wirken. Ein Rückfluss aus dem Stellorgan in die Arbeitsschaltung ist damit verhindert. Die Motor-/Pumpenvorrichtung kann dann Fluid in den Speicher 7 pumpen. Dies bietet den Vorteil, dass die Funktion des Gesamtsystems, z.B. eine Windkraftanlage, während des Füllens des Speichers nicht beeinträchtigt wird. Es ist deshalb nicht notwendig das Stellorgan in die sichere Stellung zu bringen, um den Speicher aufzuladen. Das Gesamtsystem, z.B. eine Windkraftanlage, kann weiterhin Strom produzieren während der Speicher geladen wird. Das Stellorgan ist währenddessen in beliebiger Position festgestellt.

Das Konzept eines fluidtechnischen Systems, welches mindestens ein Stellorgan, eine Pumpe und einen Speicher umfasst, wobei das Stellorgan in einer Position festsetzbar ist während die Pumpe den Speicher lädt, wird als eigenständiges erfinderisches Konzept betrachtet. Dieses Konzept kann deshalb unabhängig von dem beschriebenen störungssicheren Betätigungssystem genutzt werden. Insbesondere ist es möglich einzelne Elemente oder Eigenschaften des störungssicheren Betätigungssystems beliebig mit einem fluidtechnischen System zum Festsetzen eines Stellorgans und Laden eines Speichers zu kombinieren.

Das gesamte störungssichere Betätigungssystem kann mittels elektronischer Komponenten überwacht werden. Dabei kann ein Eintreten eines Störungszustands in der Arbeitsschaltung bereits vor vollständigem Ausfall der Arbeitsschaltung erkannt werden. Daraufhin kann die Sicherheitsschaltung aktiviert werden, um einen weiteren Schaden an der Arbeitsschaltung zu verhindern. Es kann jedoch auch vorgesehen sein, dass das Einnehmen der Sicherheitsstellung mittels eines externen Signals, z.B. per Fernwartung, ausgelöst wird.

Besonders bevorzugt ist das Betätigungssystem ein selbstüberwachtes System, welches den Zustand des (Hochdruck-) Speichers, des Reservoirs (Niederdruckspeicher) sowie der Motor-/Pumpenvorrichtung und des im System befindlichen Fluidvolumens über eine Sensorik prüft und überwacht. Hierdurch wird es möglich Warnungen auszugeben bzw. ein "Condition Monitoring" durchzuführen und im Störungszustand selbsttätig ein einnehmen der sicheren Stellung einzuleiten.

Die im Betätigungssystem eingesetzte Menge an Fluid beträgt üblicherweise weniger als 50 Liter, bevorzugt weniger als 20 Liter, besonders bevorzugt weniger als 12 Liter.

Das Betätigungssystem ist bevorzugt als geschlossenes System oder als geschlossener Kreislauf ausgebildet. Das Betätigungssystem kann als kompakte Einheit beispielsweise in der Nabe einer Windkraftanlage positioniert werden.

## Patentansprüche

1. Störungssicheres fluidtechnisches Betätigungssystem (1) mit einer Sicherheitsstellung, umfassend ein Stellorgan (2) mit mindestens einer ersten und einer zweiten Kammer (3, 4), einer Arbeitsschaltung (5) mit einer Motor-/ Pumpenvorrichtung (6), wobei mittels der Arbeitsschaltung (5) das Stellorgan (2) zumindest im Betriebszustand betätigbar ist, und einer Sicherheitsschaltung, mittels welcher das Stellorgan (2) in einem Störungszustand in die Sicherheitsstellung überführbar ist, wobei die Sicherheitsschaltung einen Speicher (7) zur Aufnahme unter Druck stehenden Fluids umfasst, der im Störungszustand selbsttätig mittels eines Schaltventils (8) mit der ersten Kammer (3) in Verbindung gebracht ist, und ein Ablassventil (9) umfasst, das im Störungszustand zum Ablassen von Fluid aus der zweiten Kammer (4) in Durchflussstellung gebracht ist, und die Sicherheitsschaltung derart ausgestaltet ist, dass im Betriebszustand ein von dem Speicher (7) entkoppelter Zufluss mittels der Arbeitsschaltung (5) mit der Motor- / Pumpenvorrichtung (6) in das Stellorgan (2) einstellbar ist,
**dadurch gekennzeichnet, dass**
mittels der Sicherheitsschaltung im Störungszustand ein von der Arbeitsschaltung (5) mit der Motor-/Pumpenvorrichtung (6) vollständig entkoppelter Zufluss mittels des Speichers (7) in die erste Kammer (3) geschaffen ist, das Stellorgan (2) drei Kammern (3, 4, 15) aufweist, wobei die Sicherheitsschaltung derart ausgestaltet ist, dass im Betriebszustand ein von dem Speicher (7) entkoppelter Zufluss mittels der Arbeitsschaltung (5) mit der Motor-/Pumpenvorrichtung (6) in die dritte Kammer (15) einstellbar ist, wobei eine Füllleitung (13) vorgesehen ist, mittels der Fluid aus der Arbeitsschaltung (5) dem Speicher (7) zuführbar ist, wobei der Speicher (7) mittels mindestens einem Ventilelement (10b, 10c) von der Arbeitsschaltung (5) entkoppelt ist, welches ein Rückfliessen von Fluid in die Arbeitsschaltung (5) verhindert.

2. Betätigungssystem (1) nach Anspruch 1,
**dadurch gekennzeichnet, dass**
mindestens ein Ventilelement (10a) vorgesehen ist, das zum vollständigen Entkoppeln der Sicherheitsschaltung von der Arbeitsschaltung (5) im Störungszustand eine Fluidverbindung zwischen dem aus dem Speicher (7) freigegebenen Fluid mit dem in der Arbeitsschaltung (5) befindlichen Fluid verhindert.

3. Betätigungssystem (1) nach einem der vorhergehenden Ansprüche,
**dadurch gekennzeichnet, dass**
das Ablassventil (9) derart ausgestaltet und angesteuert ist, dass ein Fluiddruck aus dem Speicher (7) im Störungszustand als Steuerdruck am Ablassventil (9) ansteht.

4. Betätigungssystem (1) nach Anspruch 1 oder 2,
**dadurch gekennzeichnet, dass**
das Ablassventil (9) derart ausgestaltet und angesteuert ist, dass im Störungszustand mittels des Schaltventils (8) eine, bevorzugt mechanische oder elektrische, Zwangsöffnung erfolgt.

5. Betätigungssystem (1) nach einem der vorhergehenden Ansprüche,
**dadurch gekennzeichnet, dass**
die Sicherheitsschaltung eine Abflussleitung (11) umfasst, welche mit der zweiten Kammer (4) des Stellorgans (2) verbunden ist und in der das Ablassventil (9) positioniert ist, wobei die Abflussleitung (11) vom Speicher (7) vollständig entkoppelt ist.

6. Betätigungssystem (1) nach Anspruch 5,
**dadurch gekennzeichnet, dass**
die Abflussleitung (11) die Arbeitsschaltung (5) umgeht.

7. Betätigungssystem (1) nach einem der Ansprüche 5 oder 6,
**dadurch gekennzeichnet, dass**
ein Reservoir (12) zur Aufnahme von Fluid vorgesehen ist, und die Abflussleitung (11) stromabwärts des Ablassventils (9) in das Reservoir (12) mündet.

8. Betätigungssystem (1) nach Anspruch 7,
**dadurch gekennzeichnet, dass**
die Arbeitsschaltung (5) eine Fluidverbindung zum Reservoir (12) aufweist, mittels welcher Fluid aus dem Reservoir (12) in die Arbeitsschaltung (5) aufnehmbar ist.

9. Betätigungssystem (1) nach einem der Ansprüche 2 bis 8,
**dadurch gekennzeichnet, dass**
im Betriebszustand und ohne Volumenstrom der Motor-/Pumpenvorrichtung ein Fluss von Fluid aus Kammern (3, 4, 15), die mit der Arbeitsschaltung in Verbindung stehen, mittels mindestens eines Ventilelements (10a, 10d) verhindert ist.

10. Betätigungssystem (1) nach einem der vorhergehenden Ansprüche,
**dadurch gekennzeichnet, dass**
die Motor-/Pumpenvorrichtung (6) eine erste und eine zweite Anschlussleitung (14a, 14b) aufweist, wobei im Betriebszustand eine der Anschlussleitungen (14a, 14b) Fluid in Richtung einer Kammer (4, 15) des Stellorgans (2) leitet und die andere der Anschlussleitungen (14a, 14b) Fluid aus Richtung mindestens einer anderen Kammer (4, 15) des Stellorgans (2) zur Motor-/Pumpenvorrichtung (6) leitet.

11. Betätigungssystem (1) nach Anspruch 10,
**dadurch gekennzeichnet, dass**
die Arbeitsschaltung (5) eine in ihrer Förderrichtung umkehrbare Motor-/Pumpenvorrichtung (6) aufweist, wobei bei einer ersten Förderrichtung der Motor-/Pumpenvorrichtung (6) die erste Anschlussleitung (14a) Fluid in Richtung einer Kammer (4, 15) des Stellorgans (2) leitet und die zweite Anschlussleitung (14b) Fluid aus Richtung der mindestens einen anderen Kammer (4, 15) des Stellorgans (2) zur Motor-/Pumpenvorrichtung (6) leitet, und in der zweiten Förderrichtung die Flussrichtungen in der ersten und zweiten Anschlussleitung (14a, 14b) entgegengesetzt zu den Flussrichtungen während der ersten Förderrichtung sind.

12. Betätigungssystem (1) nach einem der vorhergehenden Ansprüche,
**dadurch gekennzeichnet, dass**
die Arbeitsschaltung (5) eine drehzahlveränderbare Konstant- oder Verstellpumpe umfasst.

13. Verfahren zur Betätigung eines Stellorgans (2) mit drei Kammern (3, 4, 15) mittels eines störungssicheren Betätigungssystems (1) nach einem der Ansprüche 1 bis 12, wobei im Betriebszustand das Stellorgan (2) mittels der, in die zweite oder dritte Kammer (4, 15) fördernden Arbeitsschaltung (5) betätigt wird, und im Störungszustand das Stellorgan (2) in die Sicherheitsstellung gebracht wird, umfassend die Schritte:
- Verbinden des Speichers (7) mit der ersten Kammer (3) des Stellorgans (2), wobei ein von der Arbeitsschaltung (5) vollständig entkoppelter Zufluss in die erste Kammer (3) geschaffen ist,
- Ablassen von Fluid aus der zweiten Kammer (4) des Stellorgans (2) mittels des Ablassventils (9), das hierzu in Durchflussstellung gebracht wird, und
- Verhindern eines Rückfliessens von Fluid in die Arbeitsschaltung (5) mittels dem Speicher (7) aus der Arbeitsschaltung (5) durch eine dafür vorgesehene Füllleitung (13) zugeführten Fluids, wobei der Speicher (7) mittels mindestens einem Ventilelement (10b, 10c) von der Arbeitsschaltung (5) entkoppelt ist.

14. Verwendung eines störungssicheren Betätigungssystems (1) nach einem der Ansprüche 1 bis 13 in einer Windkraftanlage zum Einstellen des Anströmwinkels mindestens eines Rotorblatts.

## Claims

1. A fail-safe fluid-based actuation system (1) having a safety position, comprising an actuator (2) with at least a first and a second chamber (3, 4), a working circuit (5) with a motor/pump device (6), whereby the actuator (2) can be actuated by means of the working circuit (5), at least in the operative state, a safety circuit by means of which, in a failure state, the actuator (2) can be moved into the safety position, whereby the safety circuit has a tank (7) that holds pressurized fluid and that, in the failure state, is automatically connected to the first chamber (3) via a switching valve (8), and it has a drain valve (9) that, in the failure state, is moved into the through-flow position in order to drain fluid out of the second chamber (4), and the safety circuit is configured in such a way that, in the operative state, an inflow into the actuator (2) - in a manner that is completely decoupled from the tank (7) - can be established by means of the working circuit (5) with its motor/pump device (6), **characterized in that,** in the failure state, an inflow from the tank (7) into the first chamber (3) - in a manner that is completely decoupled from the working circuit (5) with its motor/pump device (6) - is created by means of the safety circuit, the actuator (2) has three chambers (3, 4, 15), whereby the safety circuit is configured in such a way that, in the operative state, an inflow into the third chamber (15) - in a manner that is decoupled from the tank (7) - can be established by means of the working circuit (5) with its motor/pump device (6), whereby a filling line (13) is provided by means of which the fluid from the working circuit (5) can be fed into the tank (7), whereby the tank (7) is decoupled from the working circuit (5) by means of at least one valve element (10b, 10c) that prevents fluid from flowing back into the working circuit.

2. The actuation system (1) according to claim 1, **characterized in that,** in the failure state, in order to completely decouple the safety circuit from the working circuit (5), at least one valve element (10a) is provided that prevents a fluid communication between the fluid released from the tank (7) and the fluid present in the working circuit (5).

3. The actuation system (1) according to one of the preceding claims, **characterized in that** the drain valve (9) is configured and actuated in such a way that, in the failure state, a fluid pressure from the tank (7) is available as a control pressure at the drain valve (9).

4. The actuation system (1) according to claim 1 or 2, **characterized in that** the drain valve (9) is configured and actuated in such a way that, in the failure state, the drain valve is forced open, preferably mechanically or electrically, by means of the switching valve (8).

5. The actuation system (1) according to one of the preceding claims, **characterized in that** the safety circuit comprises a drain line (11) which is connected to the second chamber (4) of the actuator (2) and in which the drain valve (9) is situated, whereby the drain line (11) is completely decoupled from the tank (7).

6. The actuation system (1) according to claim 5, **characterized in that** the drain line (11) bypasses the working circuit (5).

7. The actuation system (1) according to one of claims 5 or 6, **characterized in that** a reservoir (12) is provided to hold fluid, and the drain line (11) opens up into the reservoir (12) downstream from the drain valve (9).

8. The actuation system (1) according to claim 7, **characterized in that** the working circuit (5) is in fluid communication with the reservoir (12) via which fluid from the reservoir (12) can be conveyed into the working circuit (5).

9. The actuation system (1) according to one of claims 2 to 8, **characterized in that,** in the operative state and without a volume flow of the motor/pump device (6), a flow of fluid from the chambers (3, 4, 15) that are connected to the working circuit is prevented by means of at least one valve element (10a, 10d).

10. The actuation system (1) according to one of the preceding claims, **characterized in that** the motor/pump device (6) has a first and a second connecting line (14a, 14b), whereby, in the operative state, one of the connecting lines (14a, 14b) conveys fluid in the direction of a chamber (4, 15) of the actuator (2) while the other connecting line (14a, 14b) conveys fluid from the direction of the at least one other chamber (4, 15) of the actuator (2) to the motor/pump device (6).

11. The actuation system (1) according to claim 10, **characterized in that** the working circuit (5) has a motor/pump device (6) with a reversible pumping direction, whereby in a first pumping direction of the motor/pump device (6), the first connecting line (14a) conveys fluid in the direction of a chamber (4, 15) of the actuator (2), while the second connecting line (14b) conveys fluid from the direction of the at least one other chamber (4, 15) of the actuator (2) to the motor/pump device (6), and in the second pumping direction, the flow directions in the first and second connecting lines (14a, 14b) are opposite from the flow directions in the case of the first direction of rotation.

12. The actuation system (1) according to one of the preceding claims, **characterized in that** the working circuit (5) comprises a speed-variable constant-displacement pump or variable-displacement pump.

13. A method for actuating an actuator (2) having three chambers (3, 4, 15) by means of a fail-safe actuation system (1) according to one of claims 1 to 12, whereby, in the operative state, the actuator (2) is actuated by means of the working circuit (5) that pumps into the second or third chamber (4, 15), and, in the failure state, the actuator (2) is moved into the safety position, comprising the following steps:
- connecting the tank (7) to the first chamber (3) of the actuator (2), whereby an inflow into the first chamber (3) - in a manner that is completely decoupled from the working circuit (5) - is established,
- draining fluid from the second chamber (4) of the actuator (2) by means of the drain valve (9) that is moved into the through-flow position for this purpose, and
- preventing a backflow of fluid into the working circuit (5) by means of fluid fed into the tank (7) out of the working circuit (5) via a filling line (13) provided for this purpose, whereby the tank (7) is decoupled from the working circuit (5) by at least one valve element (10b, 10c).

14. The use of a fail-safe actuation system (1) according to one of claims 1 to 13 in a wind power plant in order to set the angle of attack of at least one rotor blade.

## Revendications

1. Système d'actionnement (1) fluidique sécurisé contre les dérangements présentant une position de sécurité, comprenant un organe de réglage (2) présentant au moins une première et une deuxième chambre (3, 4), un circuit de travail (5) présentant un dispositif avec moteur et pompe (6), l'organe de réglage (2) pouvant, au moins dans l'état de fonctionnement, être actionné au moyen du circuit de travail (5), et un circuit de sécurité au moyen duquel l'organe de réglage (2) peut, dans un état de dérangement, être amené dans la position de sécurité, le circuit de sécurité comprenant un accumulateur (7) destiné à recevoir du fluide sous pression et qui, dans l'état de dérangement, est mis automatiquement en liaison avec la première chambre (3) au moyen d'un soupape de commande (8), et comprenant une soupape de décharge (9) qui, dans l'état de dérangement, est amenée en position de passage pour évacuer du fluide hors de la deuxième chambre (4), et le circuit de sécurité étant conçu de telle sorte que, dans l'état de fonctionnement, un afflux découplé de l'accumulateur (7) peut être orienté en direction de l'organe de réglage (2) au moyen du circuit de travail (5) incluant le dispositif avec moteur et pompe (6),
**caractérisé en ce que**,
au moyen du circuit de sécurité, dans l'état de dérangement, un afflux entièrement découplé du circuit de travail (5) incluant le dispositif avec moteur et pompe (6) est créé au moyen de l'accumulateur (7) en direction de la première chambre (3), et **en ce que** l'organe de réglage (2) comporte trois chambres (3, 4, 15), le circuit de sécurité étant conçu de façon que, dans l'état de fonctionnement, un afflux découplé de l'accumulateur (7) peut être orienté en direction de la troisième chambre (15) au moyen du circuit de travail (5) incluant le dispositif avec moteur et pompe (6), une conduite de remplissage (13) étant prévue, au moyen de laquelle du fluide issu du circuit de travail (5) peut être amené à l'accumulateur (7), l'accumulateur (7) étant découplé du circuit de travail (5) au moyen d'au moins un élément de soupape (10b, 10c) qui empêche un reflux du fluide vers le circuit de travail (5).

2. Système d'actionnement (1) selon la revendication 1, **caractérisé en ce qu'**est prévu au moins un élément de soupape (10a) qui, pour découpler entièrement le circuit de sécurité du circuit de travail (5) dans l'état de dérangement, empêche une communication fluidique entre le fluide libéré de l'accumulateur (7) et le fluide qui se trouve dans le circuit de travail (5).

3. Système d'actionnement (1) selon l'une des revendications précédentes, **caractérisé en ce que** la soupape de décharge (9) est conçue et commandée de manière telle que, dans l'état de dérangement, une pression fluidique issue de l'accumulateur (7) est appliquée en tant que pression de commande sur la soupape de décharge (9).

4. Système d'actionnement (1) selon la revendication 1 ou 2, **caractérisé en ce que** la soupape de décharge (9) est conçue et commandée de manière telle que, dans l'état de dérangement, il se produit, au moyen du soupape de commande (8), une ouverture forcée, préférentiellement mécanique ou électrique.

5. Système d'actionnement (1) selon l'une des revendications précédentes, **caractérisé en ce que** la commande de sécurité comprend une conduite d'évacuation (11) qui est reliée à la deuxième chambre (4) de l'organe de réglage (2) et dans laquelle est positionnée la soupape de décharge (9), la conduite d'évacuation (11) étant entièrement découplée de l'accumulateur (7).

6. Système d'actionnement (1) selon la revendication 5, **caractérisé en ce que** la conduite d'évacuation (11) contourne le circuit de travail (5).

7. Système d'actionnement (1) selon l'une des revendications 5 ou 6, **caractérisé en ce qu'**est prévu un réservoir (12) destiné à recevoir du fluide et **en ce que** la conduite d'évacuation (11) débouche sur le réservoir (12) en aval de la soupape de décharge (9).

8. Système d'actionnement (1) selon la revendication 7, **caractérisé en ce que** le circuit de travail (5) présente une liaison fluidique vers le réservoir (12), au moyen de laquelle du fluide issu du réservoir (12) peut être admis dans le circuit de travail (5).

9. Système d'actionnement (1) selon l'une des revendications 2 à 8, **caractérisé en ce que**, dans l'état de fonctionnement et sans débit volumique du dispositif avec moteur et pompe, un flux de fluide provenant de chambres (3, 4, 15) qui sont en liaison avec le circuit de travail est empêché au moyen d'au moins un élément de soupape (10a, 10d).

10. Système d'actionnement (1) selon l'une des revendications précédentes, **caractérisé en ce que** le dispositif avec moteur et pompe (6) comporte une première et une deuxième conduite de raccordement (14a, 14b), l'une des conduites de raccordement (14a, 14b) transportant, dans l'état de fonctionnement, du fluide vers une chambre (4, 15) de l'organe de réglage (2) et l'autre conduite de raccordement (14a, 14b) transportant du fluide depuis au moins une autre chambre (4, 15) de l'organe de réglage (2) vers le dispositif avec moteur et pompe (6).

11. Système d'actionnement (1) selon la revendication 10, **caractérisé en ce que** le circuit de travail (5) comporte un dispositif avec moteur et pompe (6) dont le sens de transport peut être inversé, la première conduite de raccordement (14a), pour un premier sens de transport du dispositif avec moteur et pompe (6), transportant du fluide vers une chambre (4, 15) de l'organe de réglage (2) et la deuxième conduite de raccordement (14b) transportant du fluide depuis l'au moins une autre chambre (4, 15) de l'organe de réglage (2) vers le dispositif avec moteur et pompe (6) et, dans le deuxième sens de transport, les sens d'écoulement dans les première et deuxième conduites de raccordement (14a ,14b) étant opposés aux sens d'écoulement pendant le premier sens de transport.

12. Système d'actionnement (1) selon l'une des revendications précédentes, **caractérisé en ce que** le circuit de travail (5) comprend une pompe à régime variable, dont le débit est constant ou variable.

13. Procédé d'actionnement d'un organe de réglage (2) à trois chambres (3, 4, 15) au moyen d'un système d'actionnement (1) sécurisé contre les dérangements selon l'une des revendications 1 à 12, l'organe de réglage étant, dans l'état de fonctionnement, actionné au moyen du circuit de travail (5) qui assure le transport vers la deuxième ou la troisième chambre (4, 15), et l'organe de réglage (2) étant, dans l'état de dérangement, amené dans la position de sécurité, comportant les étapes suivantes :
- relier l'accumulateur (7) à la première chambre (3) de l'organe de réglage (2), un afflux entièrement découplé du circuit de travail (5) étant créé en direction de la première chambre (3),
- évacuer du fluide hors de la deuxième chambre (4) de l'organe de réglage (2) au moyen de la soupape de décharge (9) qui, à cet effet, est amenée en position de passage, et
- empêcher, au moyen de l'accumulateur (7), un reflux de fluide du circuit de travail (5) vers le circuit de travail (5) par une conduite de remplissage (13) pour le fluide amené prévue à cet effet, l'accumulateur (7) étant découplé du circuit de travail (5) au moyen d'au moins un élément de soupape (10b, 10c).

14. Utilisation d'un système d'actionnement (1) sécurisé contre les dérangements selon l'une des revendications 1 à 13 dans une installation éolienne pour le réglage de l'angle d'incidence d'au moins une pale de rotor.
